# EUROPEAN PATENT APPLICATION

(11) **EP 4 811 853 A1**
(43) Date of publication of application: **23.09.2026**
(21) Application number: 24899917.9
(22) Date of filing: 05.12.2024
(51) Int. Cl.: H04W 24/08

(54) **COMMUNICATION METHOD, APPARATUS, AND STORAGE MEDIUM**

(30) Priority: 08.12.2023 CN 202311691118
(71) Applicant: Huawei Technologies Co., Ltd., Shenzhen, Guangdong 518129 (CN)
(72) Inventor: LI, Fang, Shenzhen, Guangdong 518129 (CN); FAN, Bo, Shenzhen, Guangdong 518129 (CN); YUAN, Shitong, Shenzhen, Guangdong 518129 (CN); LIU, Fengwei, Shenzhen, Guangdong 518129 (CN)
(74) Representative: MERH-IP Matias Erny Reichl Hoffmann Patentanwälte PartG mbB
(86) International application number: PCT/CN2024/137124
(87) International publication number: WO 2025/119283

(57) **Abstract**

A communication method and apparatus, and a storage medium are disclosed, and relate to the field of communication technologies, to enable a terminal apparatus to start reference signal measurement and/or measurement result sending more quickly, thereby reducing communication interruptions. In this application, the terminal apparatus sends first information by using a first cell. The first information indicates that the terminal apparatus requests to measure a reference signal of a second cell, and/or the terminal apparatus requests to send measurement result information. After triggering reference signal measurement by using the first information, the terminal apparatus may start reference signal measurement. After triggering reporting of the measurement result information by using the first information, the terminal apparatus may start reporting of the measurement result information. In this solution, because the terminal apparatus may trigger reference signal measurement and/or reporting of a measurement result, the terminal apparatus can start reference signal measurement more quickly, thereby reducing communication interruptions.

## Description

### CROSS-REFERENCE TO RELATED APPLICATIONS

This application claims priority to Chinese Patent Application No. 202311691118.9, field with the China National Intellectual Property Administration on December 8, 2023 and entitled "COMMUNICATION METHOD AND APPARATUS, AND STORAGE MEDIUM", which is incorporated herein by reference in its entirety.

### TECHNICAL FIELD

This application relates to the field of communication technologies, and in particular, to a communication method and apparatus, and a storage medium.

### BACKGROUND

A 5th generation (5th generation, 5G) mobile communication system may use high-frequency communication, that is, transmit data by using an ultra-high frequency band (for example, 28 gigahertz (gigahertz, GHz)) signal. A main problem of the high-frequency communication is that signal energy sharply decreases as a transmission distance increases, and this results in a short signal transmission distance. To resolve this problem, an analog beam technology is used in the high-frequency communication. Weighted processing is performed on an antenna array, the signal energy is concentrated in a small angle range, to form a signal similar to a light beam (referred to as an analog beam, a beam for short), so that the transmission distance is extended. Both a network apparatus and a terminal apparatus need to perform transmission by using a beam. During uplink and downlink data transmission, the network apparatus and the terminal apparatus need to use a specific beam. Due to a change of an external environment, movement of the terminal apparatus, or the like, quality of a beam used for signal transmission between the terminal apparatus and the network apparatus may deteriorate. Therefore, the terminal apparatus and the network apparatus need to obtain and re-adjust a beam for communication, to improve communication quality.

In an implementation solution, the network apparatus configures, for the terminal apparatus, information such as a resource of a reference signal used for measurement. In a periodic reference signal measurement solution, when measurement time in each periodicity arrives, the terminal apparatus may measure the reference signal based on the information such as the resource configured by the network apparatus, and feed back measurement result information to the network apparatus. The network apparatus configures a beam for the terminal apparatus based on the measurement result information. In an aperiodic or a semi-persistent reference signal measurement solution, when the network apparatus determines that reference signal measurement needs to be performed, the network apparatus sends, to the terminal apparatus, signaling used to trigger reference signal measurement. The terminal apparatus starts to perform reference signal measurement based on the received signaling. The terminal apparatus feeds back measurement result information to the network apparatus. The network apparatus configures a beam for the terminal apparatus based on the measurement result information.

It can be learned from the foregoing solutions that, after channel quality changes, although the terminal apparatus finds that quality of a current serving beam deteriorates, the terminal apparatus still needs to wait until a next reference signal measurement periodicity arrives, and then start to measure the reference signal, or the terminal apparatus still needs to wait until the network apparatus delivers an instruction used to trigger reference signal measurement, and then measure the reference signal according to the instruction. Currently, these solutions cause delayed reference signal measurement, resulting in slow beam switching and frequent communication interruptions.

### SUMMARY

This application provides a communication method and apparatus, and a storage medium, to enable a terminal apparatus to start reference signal measurement more quickly, thereby reducing communication interruptions.

According to a first aspect, this application provides a communication method. The method is performed by a terminal apparatus. The terminal apparatus may be a terminal device, or may be a chip inside the terminal device.

The terminal apparatus sends first information by using a first cell, where the first information indicates that the terminal apparatus requests to measure a reference signal of a second cell. The terminal apparatus receives at least one reference signal by using the second cell. The terminal apparatus measures the at least one reference signal to obtain at least one piece of measurement result information.

It can be learned from the foregoing solution that the terminal apparatus may trigger reference signal measurement by using the first information. In other words, in an implementation of the first aspect, the terminal apparatus triggers reference signal measurement. The measurement result information obtained by the terminal apparatus may also be referred to as measurement result information obtained through reference signal measurement that is triggered by the terminal apparatus. In this solution, the terminal apparatus does not need to wait for a process of reference signal measurement triggered by a network apparatus, to be specific, the terminal apparatus does not need to wait until a next reference signal measurement periodicity arrives before starting to measure the reference signal, or the terminal apparatus does not need to wait for an instruction that is delivered by the network apparatus and that is used to trigger reference signal measurement. In this way, a subsequent beam switching process can be accelerated, and communication interruptions can be reduced.

The "measurement result information" in this application may be replaced with "measurement result information of a reference signal" or a "measurement result". For ease of description, they are uniformly referred to as "measurement result information" in this specification.

In a possible implementation of the first aspect, the terminal apparatus determines a cell in which the terminal apparatus sends the measurement result information, and the cell in which the terminal apparatus sends the measurement result information includes a third cell. The terminal apparatus sends second information by using the third cell, where the second information may include (or may not include) a part or all of the at least one piece of measurement result information.

In another possible implementation, the second information may further include measurement result information that is obtained through reference signal measurement that is not triggered by the terminal apparatus. The measurement result information that is obtained through reference signal measurement that is not triggered by the terminal apparatus includes: for example, measurement result information obtained in a process of reference signal measurement triggered by the network apparatus, and/or measurement result information obtained by periodically measuring the reference signal by the terminal apparatus.

The process of reference signal measurement triggered by the network apparatus in this application may be understood as follows: In an aperiodic (aperiodic, AP) or a semi-persistent (semi-persistent, SP) reference signal measurement solution, when the network apparatus determines that reference signal measurement needs to be performed, the network apparatus sends, to the terminal apparatus, signaling used to trigger reference signal measurement, and the terminal apparatus starts to perform reference signal measurement based on the received signaling, and obtains measurement result information. The measurement result information may also be understood as the measurement result information obtained in the process of reference signal measurement triggered by the network apparatus.

The measurement result information obtained by periodically (periodically) measuring the reference signal by the terminal apparatus in this application may be understood as follows: The network apparatus configures, for the terminal apparatus, information such as a resource of the reference signal used for measurement. In a periodic reference signal measurement solution, when measurement time in each periodicity arrives, the terminal apparatus may measure the reference signal based on the information such as the resource configured by the network apparatus, to obtain measurement result information. The measurement result information may also be understood as the measurement result information obtained by periodically measuring the reference signal by the terminal apparatus.

In a possible implementation, the first information indicates that the terminal apparatus requests to measure the reference signal of the second cell (for example, the first information may include information indicating that the terminal apparatus requests to measure the reference signal of the second cell). This implementation may also be understood as follows: The first information indicates information that the terminal apparatus requests to measure the reference signal of the second cell, but does not indicate that the terminal apparatus requests to send a measurement result of the reference signal of the second cell. In this case, the terminal apparatus may trigger reference signal measurement (for example, subsequently measure the reference signal), and the terminal apparatus does not trigger sending of the measurement result information (for example, does not send the measurement result information); or the terminal apparatus may trigger reference signal measurement (for example, subsequently measure the reference signal), and the terminal apparatus also triggers sending of the measurement result information (for example, sends the second information).

In another possible implementation, the first information further indicates that the terminal apparatus requests to send the measurement result of the reference signal of the second cell (for example, the first information may further include information indicating that the terminal apparatus requests to send the measurement result of the reference signal of the second cell). In this case, the terminal apparatus may trigger reference signal measurement (for example, subsequently measure the reference signal), and the terminal apparatus also triggers sending of the measurement result information (for example, send the second information).

In a possible implementation of the first aspect, the first cell and the second cell may be different. In a possible implementation, when the terminal apparatus determines that the reference signal of the second cell needs to be measured, current beam quality of the second cell may be already poor. In this case, if the terminal apparatus still sends, by using the second cell, the information used to request to measure the reference signal of the second cell, the second network apparatus may fail to receive the information, and consequently, the process of reference signal measurement requested by the terminal apparatus fails. When the first cell may be different from the second cell, to be specific, when the cell in which the terminal apparatus sends the information used to request to measure the reference signal of the second cell may be another cell rather than the second cell, a success rate of requesting to measure the reference signal by the terminal apparatus can be improved.

In another possible implementation of the first aspect, the first cell and the second cell may alternatively be the same, so that flexibility of the solution can be improved.

According to a second aspect, this application provides a communication method. The method is performed by a terminal apparatus. The terminal apparatus may be a terminal device, or may be a chip inside the terminal device.

The terminal apparatus sends first information by using a first cell, where the first information indicates that the terminal apparatus requests to send measurement result information. The terminal apparatus sends second information by using a third cell, where the second information includes at least one piece of measurement result information.

In an implementation of the second aspect, the measurement result information included in the second information may include: measurement result information obtained through reference signal measurement that is triggered by the terminal apparatus, and/or measurement result information obtained through reference signal measurement that is triggered by a network apparatus.

In an implementation of the second aspect, the terminal apparatus may trigger a measurement result information sending process by using the first information. In other words, the terminal apparatus may trigger sending of the measurement result information, and the terminal apparatus does not need to wait for a measurement result information sending process triggered by the network apparatus. The measurement result information included in the second information may include measurement result information obtained in a process of reference signal measurement triggered by the network apparatus and/or the terminal apparatus.

In a possible implementation of the first aspect and/or the second aspect, the first information includes at least one of the following: information indicating a reference signal resource; information indicating the second cell; indication information of a cell used to send measurement result information; indication information of a resource used to send measurement result information; and information indicating a cell to which a reference signal corresponding to measurement result information that the terminal apparatus requests to send belongs. In this way, the terminal apparatus may actively send some information required by the terminal apparatus, to notify the network apparatus side of a requirement of the terminal apparatus, so that the network apparatus subsequently configures, for the terminal apparatus, a reference signal that better meets the requirement of the terminal apparatus. The "indication information of a cell used to send measurement result information" in this application may also be replaced with "information indicating a cell used to send measurement result information", and the "indication information of a resource used to send measurement result information" in this application may also be replaced with "information indicating a resource used to send measurement result information".

In a possible implementation of the first aspect and/or the second aspect, the first information further includes information indicating at least one of the following: A plurality of reference signals that the terminal apparatus requests to measure are sent by using a same downlink spatial domain filter; a plurality of reference signals that the terminal apparatus requests to measure are capable of being simultaneously received by the terminal apparatus; a spatial domain filter corresponding to a plurality of reference signals that the terminal apparatus requests to measure is capable of being applied by the terminal apparatus to simultaneous sending; and a resource of a reference signal that the terminal apparatus requests to measure belongs to a reference signal resource associated with N transmission reception points, where N is a positive integer. In this way, the terminal apparatus may actively send some information required by the terminal apparatus, to notify the network apparatus side of a requirement of the terminal apparatus, so that the network apparatus subsequently configures, for the terminal apparatus, a reference signal that better meets the requirement of the terminal apparatus.

In a possible implementation of the first aspect and/or the second aspect, the terminal apparatus determines a first resource. The first resource is used to send information for requesting to measure a reference signal, and/or the first resource is used to send information for requesting to send measurement result information of a reference signal. The terminal apparatus sends the first information on the first resource by using the first cell. In this way, the terminal apparatus may notify the network apparatus side of a purpose of the first information by using a resource occupied by the first information, and the network apparatus side may determine, by using the resource occupied by the received first information, content indicated by the first information. In this way, signaling overheads of the first information can be reduced.

In a possible implementation of the first aspect and/or the second aspect, the terminal apparatus receives configuration information, and the terminal apparatus determines the first resource based on the configuration information. The configuration information includes at least one of the following: information indicating the first resource; the information indicating the reference signal resource, where the reference signal resource includes a resource occupied by a reference signal that the terminal apparatus requests to measure; the information indicating the second cell; the indication information of the cell used to send the measurement result information; the indication information of the resource used to send the measurement result information; and the information indicating the cell to which the reference signal corresponding to the measurement result information that the terminal apparatus requests to send belongs. The network apparatus side may configure some information for the terminal apparatus by using the configuration information, and the information may be used by the terminal apparatus to trigger reference signal measurement and/or the measurement result information sending process. Subsequently, the terminal apparatus may select from the information when triggering reference signal measurement and/or the measurement result information sending process.

In a possible implementation of the first aspect and/or the second aspect, the configuration information further includes information indicating an association relationship between any plurality of the following: the first resource, the second cell, the reference signal resource, the cell used to send the measurement result information, the resource used to send the measurement result information, and the cell to which the reference signal corresponding to the measurement result information that the terminal apparatus requests to send belongs. In this way, the terminal apparatus may subsequently send one of the plurality of pieces of information having an association relationship, so that the network apparatus side determines other information based on one piece of information, thereby achieving an effect of reducing signaling overheads.

In a possible implementation of the first aspect and/or the second aspect, the information indicating the reference signal resource includes at least one of the following: information indicating a trigger state; information indicating a channel state information report configuration; synchronization signal block index information, where the reference signal resource belongs to a resource associated with the synchronization signal block index information; an identifier of the reference signal resource; an identifier of a resource set corresponding to the reference signal resource; and an identifier of a resource configuration corresponding to the reference signal resource. The reference signal resource belongs to a resource associated with the trigger state, a cell corresponding to the reference signal resource associated with the trigger state includes the second cell, and a cell corresponding to the trigger state is different from or the same as the second cell. The reference signal resource belongs to a resource associated with the channel state information report configuration, a cell corresponding to the reference signal resource associated with the channel state information report configuration includes the second cell, and a cell corresponding to the channel state information report configuration is different from or the same as the second cell. In this way, flexibility and compatibility of the solution can be improved.

In this embodiment of this application, the information indicating the reference signal resource may further indicate other information, or may be understood that a plurality of pieces of information included in the configuration information may be same information, and a plurality of pieces of information included in the first information may be same information. For example, the first information and/or the configuration information includes the information indicating the trigger state. The information indicating the trigger state may be understood as the information indicating the reference signal resource, or may be understood as the information indicating the second cell. For another example, the first information and/or the configuration information includes the information indicating the channel state information report configuration. The information indicating the channel state information report configuration may be understood as the information indicating the reference signal resource, or may be understood as the information indicating the second cell.

In a possible implementation of the first aspect and/or the second aspect, the terminal apparatus may further receive third information by using a fourth cell. The fourth cell is the same as or different from the first cell, and the fourth cell is the same as or different from the second cell. The third information indicates that the first information is successfully received or not successfully received. Alternatively, the third information is used to: trigger the terminal apparatus to measure the reference signal of the second cell, and/or trigger the terminal apparatus to send the measurement result information. In this solution, after sending the first information, the terminal apparatus may further receive the third information, and may further determine, based on the third information, whether content requested by the terminal apparatus by using the first information is agreed. Alternatively, the terminal apparatus determines, based on the third information, information (or a parameter) associated with reference signal measurement and/or the measurement result information sending process that are/is triggered by the terminal apparatus.

In a possible implementation of the first aspect and/or the second aspect, the third information includes at least one of the following: the information indicating the second cell; the information indicating the trigger state; the information indicating the channel state information report configuration; the indication information of the cell used to send the measurement result information; the indication information of the resource used to send the measurement result information; and information indicating a cell to which a reference signal corresponding to measurement result information sent by the terminal apparatus belongs. The cell corresponding to the reference signal resource associated with the trigger state includes the second cell, the cell corresponding to the trigger state is different from or the same as the second cell, and the cell corresponding to the trigger state is different from or the same as the fourth cell. The cell corresponding to the reference signal resource associated with the channel state information report configuration includes the second cell, the cell corresponding to the channel state information report configuration is different from or the same as the second cell, and the cell corresponding to the channel state information report configuration is different from or the same as the fourth cell. In this way, the terminal apparatus may know information that is recommended on the network apparatus side, and then may consider using the information in a subsequent procedure.

In a possible implementation of the first aspect and/or the second aspect, the information indicating the trigger state includes: an identifier of the trigger state, and/or an identifier of the cell corresponding to the trigger state. In this way, flexibility of the solution can be improved. For example, because the information indicating the trigger state further includes the cell corresponding to the trigger state, a cell that sends the information indicating the trigger state may be different from the cell corresponding to the trigger state. Therefore, when communication quality of the cell corresponding to the trigger state deteriorates, a success rate of receiving the information indicating the trigger state can be improved in this application.

In a possible implementation of the first aspect and/or the second aspect, the information indicating the channel state information report configuration includes: an identifier of the channel state information report configuration, and/or an identifier of the cell corresponding to the channel state information report configuration. In this way, flexibility of the solution can be improved. For example, because the information indicating the channel state information report configuration further includes the cell corresponding to the channel state information report configuration, a cell that sends the information indicating the channel state information report configuration may be different from the cell corresponding to the channel state information report configuration. Therefore, when communication quality of the cell corresponding to the channel state information report configuration deteriorates, a success rate of receiving the information indicating the channel state information report configuration can also be improved in this application.

In a possible implementation of the first aspect and/or the second aspect, when the fourth cell is different from the cell corresponding to the trigger state and/or the cell corresponding to the channel state information report configuration, a priority of sending the measurement result information by the terminal apparatus is lower than a priority of a process of sending measurement result information associated with trigger state information corresponding to the fourth cell and/or a channel state information report configuration corresponding to the fourth cell.

It may also be understood that a priority of sending that is of measurement result information associated with a trigger state and/or channel state information of another cell and that is triggered by the terminal apparatus by using the fourth cell is lower than a priority of sending of measurement result information associated with a trigger state and/or channel state information of the fourth cell. It may also be understood that a priority of sending measurement result information associated with a trigger state and/or channel state information in inter-cell scheduling by the terminal apparatus is lower than a priority of sending measurement result information associated with a trigger state and/or channel state information in intra-cell scheduling. In this way, sending of measurement result information associated with inter-cell scheduling does not cause great interference to sending of measurement result information associated with intra-cell scheduling.

In a possible implementation of the first aspect and/or the second aspect, when the first information further indicates that the measurement result information is to be sent, a priority of sending the measurement result information by the terminal apparatus is lower than a priority of the measurement result information sending process triggered by the network apparatus. The measurement result information sending process triggered by the network apparatus may include, for example, an aperiodic and/or a semi-persistent measurement result information sending process triggered by the network apparatus. The priority of sending the measurement result information by the terminal apparatus is lower than a priority of a process of sending measurement result information obtained by the terminal apparatus by periodically measuring the reference signal.

It may also be understood that a priority of sending measurement result information associated with reference signal measurement and/or a measurement result information sending process that are/is triggered by the terminal apparatus is lower than a priority of sending measurement result information associated with reference signal measurement and/or the measurement result information sending process that are/is triggered by the network apparatus. In this way, sending of measurement result information triggered by the terminal apparatus does not cause great interference to sending of measurement result information triggered by the network apparatus.

According to a third aspect, this application provides a communication method. The method is performed by a first network apparatus. The first network apparatus may be a network device, or may be a chip inside the network device.

In the method, the first network apparatus receives first information by using a first cell, where the first information indicates that a terminal apparatus requests to measure a reference signal of a second cell. The first network apparatus determines, based on the first information, that the terminal apparatus requests to measure the reference signal of the second cell.

It can be learned from the foregoing solution that the terminal apparatus may trigger reference signal measurement by using the first information. In other words, the terminal apparatus may trigger reference signal measurement, and the terminal apparatus does not need to wait for a process of reference signal measurement triggered by the network apparatus, to be specific, the terminal apparatus does not need to wait until a next reference signal measurement periodicity arrives before starting to measure the reference signal, or the terminal apparatus does not need to wait for an instruction that is delivered by the network apparatus and that is used to trigger reference signal measurement. In this way, a subsequent beam switching process can be accelerated, and communication interruptions can be reduced.

For related content of the first information and the information included in the first information, and other descriptions and beneficial effects, refer to related descriptions of the possible implementations of the first aspect and the second aspect. Details are not described again.

According to a fourth aspect, this application provides a communication method. The method is performed by a first network apparatus. The first network apparatus may be a network device, or may be a chip inside the network device.

In the method, the first network apparatus receives first information by using a first cell, where the first information indicates that a terminal apparatus requests to send measurement result information. The first network apparatus determines, based on the first information, that the terminal apparatus requests to send the measurement result information. The first information in the fourth aspect and the first information in the third aspect may be two different pieces of first information, or may be a same piece of first information.

It can be learned from the foregoing solution that the terminal apparatus may trigger a measurement result information sending process by using the first information. In other words, the terminal apparatus may trigger sending of the measurement result information, and the terminal apparatus does not need to wait for a measurement result information sending process triggered by the network apparatus. The measurement result information included in the second information may include measurement result information obtained in a process of reference signal measurement triggered by the network apparatus and/or the terminal apparatus.

For related content of the first information and the information included in the first information, and other descriptions and beneficial effects, refer to related descriptions of the possible implementations of the first aspect and the second aspect. Details are not described again.

According to a fifth aspect, this application provides a communication method. The method is performed by a second network apparatus. The second network apparatus may be a network device, or may be a chip inside the network device. The second network apparatus may be the same as or different from a first network apparatus.

In this solution, the second network apparatus receives second information and sends a reference signal by using a second cell.

A cell in which the terminal apparatus sends first information may be the same as or different from a cell in which the terminal apparatus measures a reference signal. In this way, the terminal apparatus may trigger intra-cell reference signal measurement, or may trigger inter-cell reference signal measurement.

For related content of the second information, and other descriptions and beneficial effects, refer to related descriptions of the possible implementations of the first aspect and the second aspect. Details are not described again.

According to a sixth aspect, this application provides a communication method. The method is performed by a third network apparatus. The third network apparatus may be a network device, or may be a chip inside the network device. The third network apparatus may be the same as or different from a first network apparatus. The third network apparatus may be the same as or different from a fifth network apparatus. The third network apparatus may be the same as or different from a fourth network apparatus.

In this solution, the third network apparatus receives second information by using a third cell.

The second information may include measurement result information, and a cell used to send the measurement result information may be separately set. For example, a cell with low load may be set, or a cell with good communication quality may be set, to send the measurement result information. In this way, a success rate of receiving the measurement result information can be improved, and network load can be balanced.

For related content of the second information, and other descriptions and beneficial effects, refer to related descriptions of the possible implementations of the first aspect and the second aspect. Details are not described again.

According to a seventh aspect, this application provides a communication method. The method is performed by a fourth network apparatus. The fourth network apparatus may be a network device, or may be a chip inside the network device. The fourth network apparatus may be the same as or different from a first network apparatus. The fourth network apparatus may be the same as or different from a fifth network apparatus.

In this solution, the fourth network apparatus sends third information by using a fourth cell.

During reference signal measurement and/or a measurement result information sending process triggered by a terminal apparatus, the fourth network apparatus may also send information by using the fourth cell, to indicate information required in a subsequent process of the terminal apparatus. For example, the terminal apparatus determines, based on the third information, whether content requested by the terminal apparatus by using first information is agreed. Alternatively, the terminal apparatus determines, based on the third information, information (or a parameter) associated with reference signal measurement and/or the measurement result information sending process that are/is triggered by the terminal apparatus.

For related content of the third information, and other descriptions and beneficial effects, refer to related descriptions of the possible implementations of the first aspect and the second aspect. Details are not described again.

According to an eighth aspect, this application provides a communication method. The method is performed by a fifth network apparatus. The fifth network apparatus may be a network device, or may be a chip inside the network device. The fifth network apparatus may be the same as or different from a first network apparatus.

In the method, the fifth network apparatus sends configuration information.

The fifth network apparatus may configure some information for a terminal apparatus by using the configuration information, and the information may be used by the terminal apparatus to trigger reference signal measurement and/or a measurement result information sending process. Subsequently, the terminal apparatus may select from the information when triggering reference signal measurement and/or the measurement result information sending process.

For related content of the configuration information, and other descriptions and beneficial effects, refer to related descriptions of the possible implementations of the first aspect and the second aspect. Details are not described again.

According to a ninth aspect, a communication apparatus is provided. The communication apparatus may be the terminal apparatus, the first network apparatus, the second network apparatus, the third network apparatus, the fourth network apparatus, or the fifth network apparatus. The communication apparatus may include a communication unit and a processing unit, to perform any one of the first aspect to the eighth aspect or any possible implementation of the first aspect to the eighth aspect. The communication unit is configured to perform functions related to sending and receiving. The communication unit may be referred to as a transceiver unit. Optionally, the communication unit includes a receiving unit and a sending unit. In a design, the communication apparatus is a communication chip, the processing unit may be one or more processors or processor cores, and the communication unit may be an input/output circuit, an input/output interface, or an antenna port of the communication chip.

In another design, the communication unit may be a transmitter and a receiver, or the communication unit may be a transmitter machine and a receiver machine.

Optionally, the communication apparatus further includes modules that may be configured to perform any one of the first aspect to the eighth aspect or any possible implementation of the first aspect to the eighth aspect.

According to a tenth aspect, a communication apparatus is provided. The communication apparatus may be the terminal apparatus, the first network apparatus, the second network apparatus, the third network apparatus, the fourth network apparatus, or the fifth network apparatus. The communication apparatus may include a processor and a memory, to perform any one of the first aspect to the eighth aspect or any possible implementation of the first aspect to the eighth aspect. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect to the eighth aspect or any possible implementation of the first aspect to the eighth aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to an eleventh aspect, a communication apparatus is provided. The communication apparatus may be the terminal apparatus, the first network apparatus, the second network apparatus, the third network apparatus, the fourth network apparatus, or the fifth network apparatus. The communication apparatus may include a processor, to perform any one of the first aspect to the eighth aspect or any possible implementation of the first aspect to the eighth aspect. The processor is coupled to a memory. Optionally, the communication apparatus further includes the memory. Optionally, the communication apparatus further includes a communication interface, and the processor is coupled to the communication interface.

In an implementation, when the communication apparatus is the terminal apparatus, the first network apparatus, the second network apparatus, the third network apparatus, the fourth network apparatus, or the fifth network apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a twelfth aspect, a system is provided. The system includes the foregoing terminal apparatus.

In a possible implementation, the system may further include one or more of the first network apparatus, the second network apparatus, the third network apparatus, the fourth network apparatus, and the fifth network apparatus.

According to a thirteenth aspect, a computer program product is provided. The computer program product includes a computer program (which may also be referred to as code or instructions). When the computer program is run, a computer is enabled to perform any one of the first aspect to the eighth aspect, or perform any possible implementation of the first aspect to the eighth aspect.

According to a fourteenth aspect, a computer-readable storage medium is provided. The computer-readable medium stores a computer program (which may also be referred to as code or instructions). When the computer program is run on a computer, the computer is enabled to perform any one of the first aspect to the eighth aspect or any possible implementation of the first aspect to the eighth aspect.

According to a fifteenth aspect, a processing apparatus is provided. The processing apparatus includes an interface circuit and a processing circuit. The interface circuit may include an input circuit and an output circuit. The processing circuit is configured to: receive a signal through the input circuit and transmit a signal through the output circuit, so that any one of the first aspect to the eighth aspect or any possible implementation of the first aspect to the eighth aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit serves as the input circuit and the output circuit at different moments. Specific implementations of the processor and various circuits are not limited in this application.

In an implementation, the communication apparatus is a terminal apparatus, a first network apparatus, a second network apparatus, a third network apparatus, a fourth network apparatus, or a fifth network apparatus. The interface circuit may be a radio frequency processing chip in the terminal apparatus, the first network apparatus, the second network apparatus, the third network apparatus, the fourth network apparatus, or the fifth network apparatus, and the processing circuit may be a baseband processing chip in the terminal apparatus, the first network apparatus, the second network apparatus, the third network apparatus, the fourth network apparatus, or the fifth network apparatus.

In another implementation, the communication apparatus may be some components in the terminal apparatus, the first network apparatus, the second network apparatus, the third network apparatus, the fourth network apparatus, or the fifth network apparatus, for example, an integrated circuit product like a system chip or a communication chip. The interface circuit may be an input/output interface, an interface circuit, an output circuit, an input circuit, a pin, a related circuit, or the like on the chip or a chip system. The processing circuit may be a logic circuit on the chip.

### BRIEF DESCRIPTION OF DRAWINGS

FIG. 1 is a diagram of an architecture of a communication system;
FIG. 2A is a possible schematic flowchart of a communication method according to an embodiment of this application;
FIG. 2B is a possible schematic flowchart of another communication method according to an embodiment of this application;
FIG. 2C is a possible schematic flowchart of another communication method according to an embodiment of this application;
FIG. 3 is a possible schematic flowchart of another communication method according to an embodiment of this application;
FIG. 4 is a diagram of a structure of a communication apparatus according to an embodiment of this application; and
FIG. 5 is a diagram of another structure of a communication apparatus according to an embodiment of this application.

### DESCRIPTION OF EMBODIMENTS

Before this application is described, some terms in embodiments of this application are first briefly explained and described, to facilitate understanding of a person skilled in the art.

### (1) Reference signal

The reference signal in embodiments of this application may include (or be) any one or more of a channel state information (channel state information, CSI) reference signal (reference signal, RS) (the channel state information reference signal may also be denoted as a CSI-RS), a synchronization signal block (synchronization signal block, SSB), a synchronization signal/physical broadcast channel block (Synchronization signal/physical broadcast channel block, SS/PBCH block), a demodulation reference signal (demodulation reference signal, DMRS), a tracking reference signal (tracking reference signal, TRS), a phase tracking reference signal (phase tracking reference signal, PTRS), a cell reference signal (cell reference signal, CRS), and a sounding reference signal (sounding reference signal, SRS). In embodiments of this application, the SSB and the SS/PBCH block may be replaced with each other.

### (2) Resource

In the protocol, the term "beam" is not directly used to represent a beam, but another manner is used to implicitly describe a beam-related operation. For example, in beam measurement, there is a correspondence between a beam and a resource (a network apparatus sends a resource corresponding to the beam by using the beam), and that a terminal apparatus measures quality of the resource is equivalent to measuring quality of the beam. The resource in embodiments of this application may include, for example, a reference signal resource.

The resource in embodiments of this application may include at least one of a time domain resource, a frequency domain resource, or the like.

The time domain resource may include at least one of a radio frame, a subframe, a slot (slot), a mini-slot (mini-slot), or an orthogonal frequency division multiplexing (orthogonal frequency division multiplexing, OFDM) symbol (symbol). One radio frame may include a plurality of subframes, one subframe may include one or more slots, and one slot may include at least one symbol. Alternatively, one radio frame may include a plurality of slots, and one slot may include at least one symbol. It should be noted that, in embodiments of this application, one OFDM symbol may also be referred to as one symbol for short.

The frequency domain resource may include at least one of a resource element (resource element, RE), a resource block (resource block, RB), a channel, a sub-channel (sub-channel), a carrier (carrier), or a bandwidth part (BWP, bandwidth part). In embodiments of this application, the channel may also be equivalently replaced with a resource block set (resource block set, RB set), and a frequency domain bandwidth of one RB set may be 20 megahertz (megahertz, MHz).

### (3) Beam

In the new radio (new radio, NR) protocol, the beam may be represented as a spatial domain filter (spatial domain filter), or referred to as a spatial filter (spatial filter), or referred to as a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by using a transmission configuration indicator state (transmission configuration indicator state, TCI-state) parameter, or may be indicated by using a spatial relation parameter.

Therefore, in this application, the beam may be replaced with the spatial domain filter, the spatial filter, the spatial domain parameter, the spatial parameter, the spatial domain setting, the spatial setting, the QCL information, the QCL assumption, the QCL indication, the TCI-state (a downlink TCI-state and an uplink TCI-state), a spatial relation, or the like. The above terms are also equivalent to each other. Alternatively, the beam may be replaced with another term for representing a beam. This is not limited in this application.

In embodiments of this application, any two of the downlink beam, the CSI-RS, the TCI-state, the downlink/joint TCI state (DL or joint TCI state), the SSB, and the tracking reference signal (tracking reference signal, TRS) may be replaced with each other.

A beam used to send a signal may be referred to as a transmission beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by using a TCI-state.

In embodiments of this application, any two of the uplink beam, the uplink (uplink, UL) TCI state, the DL or joint TCI state, the SRS, the CSI-RS, the SSB, and the TRS may be replaced with each other.

A beam used to receive a signal may be referred to as a reception beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by using a spatial relation, an uplink TCI-state, or an SRS resource (which indicates that a transmission beam of an SRS is used). Therefore, the uplink beam may alternatively be replaced with the SRS resource.

The transmission beam may be distribution of signal strength formed in different directions in space after a signal is transmitted through an antenna, and the reception beam may be distribution of signal strength, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

Generally, the beam is associated with the resource. For example, during beam measurement, a network device measures different beams by using different resources, and a terminal device feeds back measured resource quality, so that the network device knows quality of an associated beam. During data transmission, beam information is also indicated by using a resource associated with the beam information. For example, the network device indicates information about a physical downlink shared channel (physical downlink shared channel, PDSCH) beam of the terminal device by using a TCI field in downlink control information (downlink control information, DCI).

Optionally, a plurality of beams having same or similar communication features are considered as one beam. One beam may include one or more antenna ports, and is used to transmit a data channel, a control channel, a sounding signal, and the like. The one or more antenna ports forming the one beam may also be considered as one antenna port set.

In embodiments of this application, unless otherwise specified, the beam is a transmission beam of the network device. During beam measurement, each beam of the network device is associated with one resource. Therefore, an index of the resource may be used to uniquely identify the beam associated with the resource.

### (4) TCI-state (indicating a downlink beam)

A network device may generate different beams that point to different transmission directions. In downlink data transmission, when sending data to a terminal device by using a specific beam, the network device needs to notify the terminal device of information about a transmission beam used by the network device, so that the terminal device can receive, by using a reception beam associated with the transmission beam, the data sent by the network device.

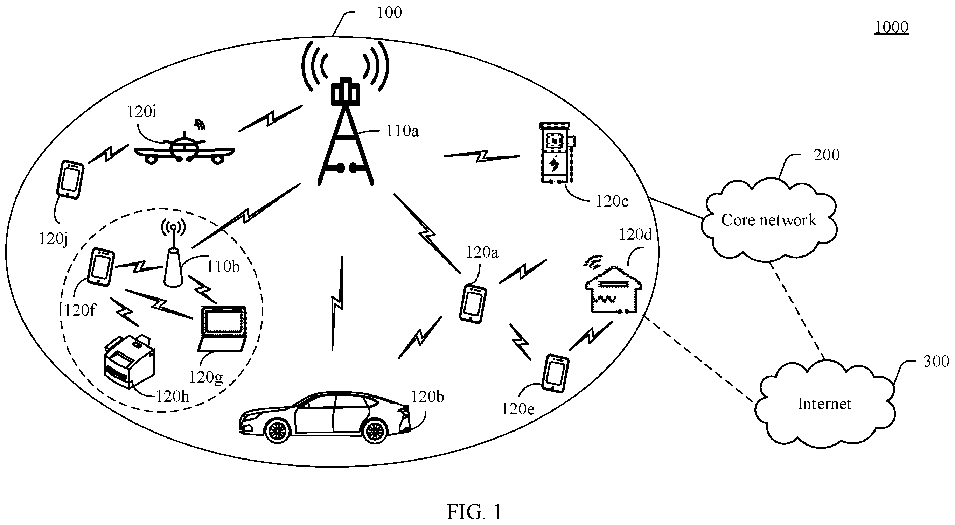

In the 3GPP R15/R16 protocol, the network device indicates, to the terminal device by using the TCI field in the DCI, related information of the transmission beam used by the network device. Specifically, a size of the TCI field is three bits, and may specifically indicate eight different field values (codepoint). Each value of the TCI field is associated with one TCI-state index, and the TCI-state index may uniquely identify one TCI-state. The TCI-state in embodiments of this application may also be written as a TCI state. The TCI-state includes several parameters, and the related information of the transmission beam may be determined by using these parameters. The TCI-state is configured by the network device for each terminal device. A structure of the TCI-state is shown in FIG. 1. Each TCI-state includes a TCI-state identifier of a TCI-state index and two pieces of QCL information (QCL information, QCL-Info). Each piece of QCL-Info includes a cell field and a bandwidth part (bandwidth part, bwp) identifier, which respectively indicate a bandwidth of a cell to which the TCI-state is applied. That is, different QCL-Info may be configured for different bandwidths of different cells or different bandwidths of a same cell. The QCL-Info further includes a reference signal, and indicates a reference signal resource that forms a QCL relationship with the reference signal.

In the R15/R16 protocol, the term "beam" is usually not directly used, and the beam is usually replaced with another term. For example, in data transmission and channel measurement, a beam is associated with a reference signal resource, and one beam is associated with one reference signal resource. Therefore, the reference signal resource that forms the QCL relationship with the reference signal herein essentially means a beam that forms the QCL relationship with the reference signal. The QCL relationship means that two reference signal resources (or two antenna ports, where the antenna ports are also in a one-to-one association with the reference signal resources) have some same spatial parameters. Specifically, spatial parameters that are the same depend on a type of the QCL-Info, namely, another field qcl-Type of the QCL-Info. qcl-Type may have four values {typeA, typeB, typeC, typeD}. TypeD is used as an example. TypeD indicates that the two reference signal resources have same spatial reception parameter information. That is, two beams have a same reception beam. A maximum of one of the two pieces of QCL-Info included in the TCI-state can be of TypeD.

### (5) Spatial relation (spatial relation) (indicating an uplink beam)

In the current protocol, a transmission beam for uplink transmission is indicated by the spatial relation, and a function of the spatial relation is similar to that of the TCI-state, and notifies the terminal device of a specific transmission beam to be used for uplink transmission.

The spatial relation also needs to be first configured by using radio resource control (radio resource control, RRC) signaling. The RRC signaling may include an identifier (identifier, ID) of the spatial relation, a cell ID, a target reference signal resource, a path loss measurement reference signal, a power control parameter, and the like. The target reference signal resource (which may be one of an SRS/SSB/CSI-RS) indicates an associated uplink beam. If a spatial relation #1 is used for uplink transmission, and the spatial relation #1 includes one target reference signal resource #2, it indicates that a transmission beam used for uplink transmission is a transmission/reception beam of the target reference signal. For example, when the target reference signal resource is an uplink resource SRS, it indicates that the transmission beam used for uplink transmission is a transmission beam of the SRS (where the transmission beam of the SRS is known). For another example, when the target reference signal resource is a downlink resource such as an SSB/a CSI-RS, it indicates that the transmission beam used for uplink transmission is a reception beam of the SSB/the CSI-RS (where the reception beam of the SSB/CSI-RS is known).

The network device may configure a plurality of spatial relations for the terminal device. Then, one of the spatial relations is activated by using a media access control control element (media access control control element or medium access control control element, MAC CE) for associated data transmission. Uplink transmission includes a physical uplink control channel (physical uplink control channel, PUCCH), an SRS, a physical uplink shared channel (physical uplink shared channel, PUSCH), and the like, and all need to be associated with a spatial relation. The spatial relation of the PUCCH is indicated by using MAC CE signaling. The spatial relation of the SRS is also indicated by using the MAC CE signaling. During PUSCH transmission, a specific SRS is associated, and transmission is performed by using the spatial relation of the SRS.

FIG. 1 illustrates a diagram of an architecture of a communication system 1000 to which an embodiment of this application is applicable. FIG. 1 is a diagram of an architecture of a communication system 1000 to which an embodiment of this application is applicable. As shown in FIG. 1, the communication system includes a radio access network (radio access network, RAN) 100 and a core network 200. Optionally, the communication system 1000 may further include an Internet 300. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Mutual connections between terminals and between RAN nodes may be implemented in a wired or wireless manner.

The RAN 100 may be an evolved universal terrestrial radio access (evolved universal terrestrial radio access, E-UTRA) system, an NR system, and a future radio access system defined in the 3rd generation partnership project (3rd generation partnership project, 3GPP). The RAN 100 may further include the foregoing two or more different radio access systems. The RAN 100 may alternatively be an open RAN (open RAN, O-RAN).

The network device in embodiments of this application may be a RAN node. The RAN node, also referred to as a radio access network device, a RAN entity, or an access node, is configured to help the terminal access the communication system in a wireless manner. In an application scenario, the RAN node may be a base station (base station), an evolved NodeB (evolved NodeB, eNodeB), a TRP, a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement a part of functions of a base station. For example, the RAN node may be a central unit (central unit, CU), a distributed unit (distributed unit, DU), a radio unit (radio unit, RU), or the like. The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or a part of functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

In different systems, the RAN node may have a different name. For example, in an O-RAN system, a CU may be referred to as an open CU (open CU, O-CU), a DU may be referred to as an open DU (open DU, O-DU), and an RU may be referred to as an open RU (open RU, O-RU). A central unit control plane (central unit control plane, CU-CP) may also be referred to as an open central unit control plane (open CU-CP, O-CU-CP), and a central unit user plane (central unit user plane, CU-UP) may also be referred to as an open central unit user plane (open CU-UP, O-CU-UP). The RAN node in embodiments of this application may be implemented by using a software module, a hardware module, or a combination of a software module and a hardware module. For example, the RAN node may be a server to which a corresponding software module is loaded. A specific technology and a specific device form that are used by the RAN node are not limited in embodiments of this application. For ease of description, the following uses a base station as an example of the RAN node for description.

The terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or mobile. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 via 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, each of 110a and 110b in FIG. 1 may be referred to as a communication apparatus having a function of a base station, and each of 120a to 120j in FIG. 1 may be referred to as a communication apparatus having a function of a terminal.

Communication between a base station and a terminal, between base stations, and between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

Communication between the access network device and the terminal device may comply with a specific protocol layer structure. For example, the protocol layer structure may include a control plane protocol layer structure and a user plane protocol layer structure. For example, the control plane protocol layer structure may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. For example, the user plane protocol layer structure may include at least one of the following: a service data adaptation protocol (service data adaptation protocol, SDAP) layer, a PDCP layer, an RLC layer, a MAC layer, a physical layer, or the like.

The access network device may include a central unit (central unit, CU) and a distributed unit (distributed unit, DU). This design may be referred to as CU and DU separation. A plurality of DUs may be centrally controlled by one CU. For example, an interface between the CU and the DU is referred to as an F1 interface. A control plane (control plane, CP) interface may be F1-C, and a user plane (user plane, UP) interface may be F1-U. A specific name of each interface is not limited in embodiments of this application. The CU and the DU may be divided based on a protocol layer of a wireless network. For example, functions of a PDCP layer and a protocol layer (for example, an RRC layer and an SDAP layer) above the PDCP layer are set in the CU, and functions of a protocol layer (for example, an RLC layer, a MAC layer, and a PHY layer) below the PDCP layer are set in the DU. For another example, the functions of the protocol layer above the PDCP layer are set in the CU, and the functions of the protocol layer below the PDCP layer are set in the DU. This is not limited.

The division into processing functions of the CU and the DU based on protocol layers is merely an example, and may also be division in another manner. For example, the CU or the DU may have functions of more protocol layers through division. For another example, the CU or the DU may have some processing functions of protocol layers through division. For example, a part of functions of the RLC layer and functions of protocol layers above the RLC layer are set in the CU, and remaining functions of the RLC layer and functions of protocol layers below the RLC layer are set in the DU. For another example, division into functions of the CU or the DU may alternatively be performed based on service types or other system requirements. For example, division may be performed based on latencies. Functions whose processing time needs to satisfy a latency requirement are set in the DU, and functions whose processing time does not need to satisfy the latency requirement are set in the CU.

Optionally, the CU may have one or more functions of the core network.

Optionally, a radio unit (radio unit, RU) of the DU may be disposed remotely. The RU has a radio frequency function. For example, the DU and the RU may be set at the PHY layer through division. For example, the DU may implement a higher-layer function of the PHY layer, and the RU may implement a lower-layer function of the PHY layer. When sending is performed, functions of the PHY layer may include at least one of the following: adding a cyclic redundancy check (cyclic redundancy check, CRC) bit, channel encoding, rate matching, scrambling, modulation, layer mapping, precoding, resource mapping, physical antenna mapping, or radio frequency sending. When receiving is performed, functions of the PHY layer may include at least one of the following: CRC check, channel decoding, de-rate matching, descrambling, demodulation, de-layer mapping, channel detection, resource demapping, physical antenna demapping, or a radio frequency receiving function. The higher-layer functions of the PHY layer may include a part of functions of the PHY layer. For example, the part of functions is closer to the MAC layer. The lower-layer functions of the PHY layer may include another part of functions of the PHY layer. For example, the part of functions is closer to a radio frequency function. For example, the higher-layer functions of the PHY layer may include adding a CRC bit, channel encoding, rate matching, scrambling, modulation, and layer mapping, and the lower-layer functions of the PHY layer may include precoding, resource mapping, physical antenna mapping, and a radio frequency sending function. Alternatively, the higher-layer functions of the PHY layer may include adding a CRC bit, channel encoding, rate matching, scrambling, modulation, layer mapping, and precoding, and the lower-layer functions of the PHY layer may include resource mapping, physical antenna mapping, and a radio frequency sending function. For example, the higher-layer functions of the PHY layer may include CRC check, channel decoding, de-rate matching, decoding, demodulation, and de-layer mapping, and the lower-layer functions of the PHY layer may include channel detection, resource demapping, physical antenna demapping, and a radio frequency receiving function. Alternatively, the higher-layer functions of the PHY layer may include CRC check, channel decoding, de-rate matching, decoding, demodulation, de-layer mapping, and channel detection, and the lower-layer functions of the PHY layer may include resource demapping, physical antenna demapping, and a radio frequency receiving function.

Optionally, the functions of the CU may be further divided, and a control plane and a user plane are separated and implemented through different entities. Separated entities are respectively a control plane CU entity (namely, a CU-CP entity) and a user plane CU entity (namely, a CU-UP entity). The CU-CP entity and the CU-UP entity may be separately connected to the DU. In embodiments of this application, the entity may be understood as a module or a unit, and may exist in a form of a hardware structure, a software module, or a combination of the hardware structure and the software module. This is not limited.

Optionally, any one of the CU, the CU-CP, the CU-UP, the DU, and the RU may be a software module, a hardware structure, or a combination of the software module and the hardware structure. This is not limited. Different entities may have a same existence form or may have different existence forms. For example, the CU, the CU-CP, the CU-UP, and the DU are software modules, and the RU is a hardware structure. For brevity of description, all possible combination forms are not enumerated herein. These modules and methods performed by these modules also fall within the protection scope of embodiments of this application. For example, when the method in embodiments of this application is performed by the access network device, the method may be specifically performed by at least one of the CU, the CU-CP, the CU-UP, or the DU.

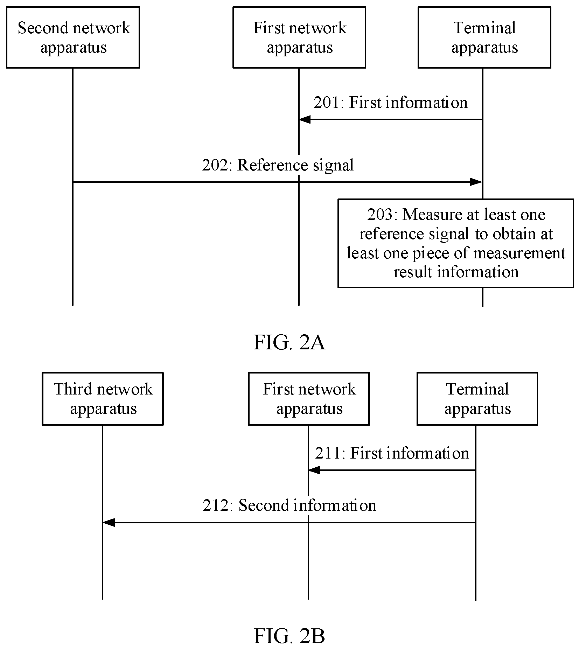

Based on the embodiment shown in FIG. 1, FIG. 2A illustrates a possible schematic flowchart of a communication method according to an embodiment of this application. A terminal apparatus in FIG. 2A may be the terminal device shown in FIG. 1 or a chip inside the terminal device. A first network apparatus and/or a second network apparatus in FIG. 2A may be the network device (for example, the RAN node, the CU, or the DU) shown in FIG. 1 or a chip in the network device (for example, a chip in the RAN node, or a chip in the CU or the DU).

As shown in FIG. 2A, the method includes step 201, step 202, and step 203. The following provides descriptions with reference to FIG. 2A.

Step 201: The terminal apparatus sends first information by using a first cell.

Correspondingly, the first network apparatus receives the first information by using the first cell.

The first information indicates that the terminal apparatus requests to measure a reference signal. In embodiments of this application, "the terminal apparatus requests to measure a reference signal" may be replaced with "the terminal apparatus triggers reference signal measurement" or "the terminal apparatus initiates reference signal measurement". For example, the terminal apparatus may request to measure a cell (for example, a second cell). In this case, it may also be understood that the first information indicates that the terminal apparatus requests to measure a reference signal of the second cell.

Step 202: The second network apparatus sends at least one reference signal by using the second cell.

Correspondingly, the terminal apparatus receives the at least one reference signal by using the second cell.

In embodiments of this application, the first cell and the second cell may be different or the same. In this way, flexibility of the solution can be improved. In a possible implementation, when the terminal apparatus determines that the reference signal of the second cell needs to be measured, current beam quality of the second cell may be already poor. In this case, if the terminal apparatus still sends, by using the second cell, information used to request to measure the reference signal of the second cell, the second network apparatus may fail to receive the information, and consequently, a process of reference signal measurement requested by the terminal apparatus fails. However, in a solution provided in embodiments of this application, the first cell may be different from the second cell, to be specific, a cell in which the terminal apparatus sends the information used to request to measure the reference signal of the second cell may not be the second cell, so that a success rate of requesting to measure the reference signal by the terminal apparatus can be improved.

In embodiments of this application, a fourth cell and a third cell are further involved subsequently. Any two of the first cell, the second cell, the fourth cell, and the third cell in embodiments of this application may be the same or different.

In embodiments of this application, the first network apparatus may be a network apparatus corresponding to the first cell. In embodiments of this application, the second network apparatus may be a network apparatus corresponding to the second cell. The first network apparatus and the second network apparatus in embodiments of this application may be the same or different. For example, the first network apparatus is the same as the second network apparatus, and the first cell is different from the second cell. For example, the first cell and the second cell are two component carriers (component carriers, CCs) of the first network apparatus.

In embodiments of this application, a third network apparatus, a fourth network apparatus, and a fifth network apparatus are further involved subsequently. The third network apparatus may be a network apparatus corresponding to a third cell, and the fourth network apparatus may be a network apparatus corresponding to a fourth cell. In embodiments of this application, a cell corresponding to any network apparatus may be understood as that the network apparatus may provide a service for the cell, or may be understood as that the cell is within a signal coverage area of the network apparatus. For example, the first network apparatus may provide a service for the first cell, the second network apparatus may provide a service for the second cell, the third network apparatus may provide a service for the third cell, and the fourth network apparatus may provide a service for the fourth cell. One network apparatus (for example, the first network apparatus, the second network apparatus, the fourth network apparatus, the third network apparatus, or the fifth network apparatus) may correspond to one or more cells.

Any one of the first cell, the second cell, the third cell, and the fourth cell in embodiments of this application may be, for example, a serving cell or a neighboring cell (for example, a cell corresponding to an additional PCI (additional PCI)) of the serving cell. Alternatively, any one of the first cell, the second cell, the third cell, and the fourth cell may be, for example, a primary cell (primary cell, PCell), a secondary cell (secondary cell, SCell), or a primary secondary cell (primary secondary cell, PSCell). In embodiments of this application, any one of the first cell, the second cell, the third cell, and the fourth cell may be replaced with a candidate cell, for example, a cell corresponding to a layer (layer, L) 1/layer 2-triggered mobility (L1/L2-triggered mobility, LTM)-candidate (candidate) ID.

In embodiments of this application, a cell of a primary component carrier (primary component carrier, PCC) may be referred to as a PCell, and a cell of a secondary component carrier (secondary component carrier, SCC) may be referred to as an SCell. In an inter-cell multiple transmission reception point (inter-cell multiple transmission reception point, inter-cell mTRP) scenario, a serving cell and a non-serving cell are respectively associated with different physical cell identifiers (physical cell identifiers, PCIs). For differentiation, a PCI of the non-serving cell may be referred to as an additional PCI (additionalPCI).

Any two of the first network apparatus, the second network apparatus, the fourth network apparatus, the third network apparatus, and the fifth network apparatus in embodiments of this application may be the same or different. When the any two network apparatuses are the same, two cells corresponding to the two network apparatuses may also be different or the same. Any two of the first network apparatus, the second network apparatus, the fourth network apparatus, the third network apparatus, and the fifth network apparatus in embodiments of this application may be respectively located on two different physical devices, or may be located on a same physical device. In embodiments of this application, when any two of the first network apparatus, the second network apparatus, the fourth network apparatus, and the third network apparatus are located on a same physical device, the two network apparatuses may alternatively be two different network apparatuses or a same network apparatus. For example, any two of the first network apparatus, the second network apparatus, the fourth network apparatus, the third network apparatus, and the fifth network apparatus may correspond to two CCs of a same base station.

Step 203: The terminal apparatus measures the at least one reference signal to obtain at least one piece of measurement result information.

The measurement result information in embodiments of this application may be replaced with measurement result information, or may be replaced with any one or more pieces of information included in the measurement result information, for example, may be replaced with information state information (channel state information, CSI). The measurement result information may include any one or more of reference signal received power (reference signal received power, RSRP) (the RSRP may also be referred to as layer 1 reference signal received power (layer 1 reference signal received power, L1-RSRP)), a signal to interference plus noise ratio (signal to interference plus noise ratio, SINR) (the SINR may also be referred to as layer 1 signal to interference plus noise ratio (layer 1 signal to interference plus noise ratio, L1-SINR)), a channel quality indicator (channel quality indicator, CQI), a precoding matrix indicator (precoding matrix indicator, PMI), a CSI reference signal resource indicator (CSI-RS resource indicator, CRI), an SSB resource indicator (SS/PBCH block resource indicator, SSBRI), a layer indicator (layer indicator, LI), and a rank indicator (rank indicator, RI).

It can be learned from the solution provided in FIG. 2A that the terminal apparatus may trigger reference signal measurement by using the first information. In other words, the terminal apparatus may trigger reference signal measurement, and the terminal apparatus does not need to wait for a process of reference signal measurement triggered by the network apparatus, to be specific, the terminal apparatus does not need to wait until a next reference signal measurement periodicity arrives before starting to measure the reference signal, or the terminal apparatus does not need to wait for an instruction that is delivered by the network apparatus and that is used to trigger reference signal measurement. In this way, a subsequent beam switching process can be accelerated, and communication interruptions can be reduced.

For example, after the channel quality changes, if the terminal apparatus finds that quality of a current serving beam deteriorates, the terminal apparatus may actively send information for requesting to measure the reference signal, and the terminal apparatus does not need to wait until a next reference signal measurement periodicity arrives before starting to measure the reference signal, or the terminal apparatus does not need to wait for an instruction that is delivered by the network apparatus and that is used to trigger reference signal measurement. In the solution provided in this embodiment of this application, because the terminal apparatus can trigger reference signal measurement, in this solution, a subsequent beam switching process can be accelerated, and communication interruptions are reduced.

In a possible implementation provided in FIG. 2A, the terminal apparatus determines a cell in which the terminal apparatus sends the measurement result information, and the cell in which the terminal apparatus sends the measurement result information includes the third cell. The terminal apparatus sends second information by using the third cell. In the implementation provided in FIG. 2A, the second information may include (or may not include) a part or all of the at least one piece of measurement result information obtained by the terminal apparatus in step 203.

In another possible implementation, the second information may further include (or may not include) measurement result information that is obtained through reference signal measurement that is not triggered by the terminal apparatus. The measurement result information that is obtained through reference signal measurement that is not triggered by the terminal apparatus includes: for example, measurement result information obtained in a process of reference signal measurement triggered by the network apparatus, and/or measurement result information obtained by periodically measuring the reference signal by the terminal apparatus.

The process of reference signal measurement triggered by the network apparatus in this application may be understood as follows: In an AP or SP reference signal measurement solution, when the network apparatus determines that reference signal measurement needs to be performed, the network apparatus sends, to the terminal apparatus, signaling used to trigger reference signal measurement, and the terminal apparatus starts to perform reference signal measurement based on the received signaling, and obtains measurement result information. The measurement result information may also be understood as the measurement result information obtained in the process of reference signal measurement triggered by the network apparatus.

The measurement result information obtained by periodically (periodically) measuring the reference signal by the terminal apparatus in this application may be understood as follows: The network apparatus configures, for the terminal apparatus, information such as a resource of the reference signal used for measurement. In a periodic reference signal measurement solution, when measurement time in each periodicity arrives, the terminal apparatus may measure the reference signal based on the information such as the resource configured by the network apparatus, to obtain measurement result information. The measurement result information may also be understood as the measurement result information obtained by periodically measuring the reference signal by the terminal apparatus.

In a possible implementation, the first information indicates that the terminal apparatus requests to measure the reference signal of the second cell (for example, the first information may include information indicating that the terminal apparatus requests to measure the reference signal of the second cell). This implementation may also be understood as follows: The first information indicates information that the terminal apparatus requests to measure the reference signal of the second cell, but does not indicate that the terminal apparatus requests to send a measurement result of the reference signal of the second cell. In this case, the terminal apparatus may trigger reference signal measurement (for example, subsequently measure the reference signal), and the terminal apparatus does not trigger sending of the measurement result information (for example, does not send the measurement result information); or the terminal apparatus may trigger reference signal measurement (for example, subsequently measure the reference signal), and the terminal apparatus also triggers sending of the measurement result information (for example, sends the second information).

In another possible implementation, the first information further indicates that the terminal apparatus requests to send the measurement result of the reference signal of the second cell (for example, the first information may further include information indicating that the terminal apparatus requests to send the measurement result of the reference signal of the second cell). In this case, the terminal apparatus may trigger reference signal measurement (for example, subsequently measure the reference signal), and the terminal apparatus also triggers sending of the measurement result information (for example, send the second information).

Based on the embodiments shown in FIG. 1 and FIG. 2A, FIG. 2B illustrates a possible schematic flowchart of a communication method according to an embodiment of this application. A third network apparatus in FIG. 2B may be the network device (for example, the RAN node, the CU, or the DU) shown in FIG. 1 or a chip in the network device (for example, a chip in the RAN node, or a chip in the CU or the DU). For related descriptions of a terminal apparatus, a first network apparatus, and the third network apparatus in FIG. 2B, refer to related descriptions in FIG. 2A. Details are not described again.

As shown in FIG. 2B, the method includes step 211, step 212, and step 213. The following provides descriptions with reference to FIG. 2B.

Step 211: The terminal apparatus sends first information by using a first cell.

Correspondingly, the first network apparatus receives the first information by using the first cell.

The first information indicates that the terminal apparatus requests to send measurement result information. In embodiments of this application, "the terminal apparatus requests to send the measurement result information" may be replaced with "the terminal apparatus triggers sending of the measurement result information", or replaced with "the terminal apparatus triggers reporting of the measurement result information", or replaced with "the terminal apparatus initiates sending of the measurement result information", or replaced with "the terminal apparatus initiates reporting of the measurement result information". In embodiments of this application, "reporting" and "sending" may be replaced with each other.

Step 212: The terminal apparatus sends second information by using a third cell.

Correspondingly, the third network apparatus receives the second information by using the third cell.

The second information includes at least one piece of measurement result information.

In embodiments of this application, the third cell and the first cell may be different or the same. In this way, flexibility of the solution can be improved.

It can be learned from the solution provided in FIG. 2B that the terminal apparatus may trigger a measurement result information sending process by using the first information. In other words, the terminal apparatus may trigger sending of the measurement result information, and the terminal apparatus does not need to wait for the measurement result information sending process triggered by the network apparatus, to be specific, the terminal apparatus does not need to wait until a next measurement result information sending periodicity arrives before starting to send the measurement result information, or the terminal apparatus does not need to wait for an instruction that is delivered by the network apparatus and that is used to trigger sending of the measurement result information. In this way, a subsequent beam switching process can be accelerated, and communication interruptions can be reduced.

For example, after the channel quality changes, if the terminal apparatus finds that quality of a current serving beam deteriorates, the terminal apparatus may actively send information for requesting to send the measurement result information, and the terminal apparatus does not need to wait until a next reference signal measurement periodicity arrives before starting to send the measurement result information, or the terminal apparatus does not need to wait for an instruction that is delivered by the network apparatus and that is used to trigger sending of the measurement result information. In the solution provided in this embodiment of this application, because the terminal apparatus can trigger sending of the measurement result information, in this solution, a subsequent beam switching process can be accelerated, and communication interruptions are reduced.

In embodiments of this application, "sending of measurement result information triggered by a terminal apparatus" may also be referred to as "a measurement result information sending process triggered by a terminal apparatus", and specifically means that the terminal apparatus sends the first information, where the first information is at least used to request to send the measurement result information. In embodiments of this application, "sending of measurement result information triggered by a network apparatus" may also be referred to as "a measurement result information sending process triggered by a network apparatus", and specifically means that the network apparatus first sends, to the terminal apparatus, information indicating sending of the measurement result information.

In embodiments of this application, a priority of sending the measurement result information by the terminal apparatus is lower than a priority of a measurement result information sending process triggered by the network apparatus. The measurement result information sending process triggered by the network apparatus may include, for example, an aperiodic and/or a semi-persistent measurement result information sending process triggered by the network apparatus. The priority of sending the measurement result information by the terminal apparatus may also be lower than a priority of a process of sending measurement result information obtained by the terminal apparatus by periodically measuring the reference signal. In this way, sending of measurement result information triggered by the terminal apparatus does not cause great interference to sending of measurement result information triggered by the network apparatus.

For example, when reporting of measurement result information triggered by the terminal apparatus overlaps with reporting of measurement result information triggered by a non-terminal apparatus (the reporting of measurement result information triggered by the non-terminal apparatus includes, for example, reporting of measurement result information triggered by the network apparatus or periodic reporting of measurement result information triggered by the terminal apparatus) on at least one OFDM symbol in time domain of the same subcarrier, a priority of reporting the measurement result information triggered by the terminal apparatus is lower than a priority of reporting the measurement result information triggered by the non-terminal apparatus, and the terminal apparatus performs multiplexing of reporting according to the priority rule or the terminal apparatus discards the measurement result information triggered by the terminal apparatus (that is, the terminal apparatus does not report the measurement result information). In a possible implementation, the measurement result information is reported according to the following priority rules: ${Pri}_{iCSI} \left(x, y, k, c, s\right) = 3 ⋅ {N}_{cells} ⋅ {M}_{s} ⋅ x + 2 ⋅ {N}_{cells} ⋅ {M}_{s} ⋅ y + {N}_{cells} ⋅ {M}_{s} ⋅ k + {M}_{s} ⋅ c + s$
*x* = 0 represents reporting of measurement result information triggered by the network apparatus or periodic measurement result information reporting of the terminal apparatus; and *x* = 1 represents reporting of measurement result information triggered by the terminal apparatus;
*y* = 0 represents an aperiodic CSI report carried on a PUSCH, *y* = 1 represents a semi-persistent CSI report carried on the PUSCH, *y* = 2 represents a semi-persistent CSI report carried on a PUCCH, and y = 3 represents a periodic CSI report carried on the PUCCH;
*k* = 0 represents a CSI report that carries L1-RSRP or L1-SINR, and *k* = 1 represents a CSI report that does not carry L1-RSRP or L1-SINR;
c represents an index of a serving cell;
*N_{cells}* represents a maximum quantity of serving cells configured by using a higher layer parameter (the higher layer parameter may be maxNrofServingCells);
s is a report configuration identifier (the report configuration identifier may be denoted as reportConfigID);
*Mₛ* represents a maximum quantity of CSI report configurations configured by using a higher layer parameter (the higher layer parameter may be maxNrofCSI-ReportConfigurations); and
Pri*_{iCSI}* (*x, y, k, c, s*) represents a priority, where a smaller Pri_{*i*CSI} (*x*, *y*, *k*, *c*, *s*) value indicates a higher priority.

In the implementation provided in FIG. 2B, the first information sent by the terminal apparatus in step 211 and the first information sent by the terminal apparatus in step 201 may be the same piece of first information, or may be two different pieces of first information. The first information in step 201 may alternatively be replaced with information indicating that the terminal apparatus requests to measure the reference signal. The first information in step 211 may alternatively be replaced with information indicating that the terminal apparatus requests to send the measurement result information.

The implementation solutions shown in FIG. 2A and FIG. 2B may be separately performed. To be specific, the terminal apparatus may separately trigger reference signal measurement, and after obtaining the measurement result information, the terminal apparatus may send the measurement result information, or may not send the measurement result information. Alternatively, the terminal apparatus may separately trigger sending of the measurement result information. The measurement result information sent by the terminal apparatus may be obtained by measuring the reference signal before. The measurement of these reference signals may include reference signal measurement triggered by the terminal apparatus and/or reference signal measurement triggered by the network apparatus.

In another possible implementation, the solutions provided in FIG. 2A and FIG. 2B may be used in combination. Based on the embodiments shown in FIG. 1, FIG. 2A, and FIG. 2B,

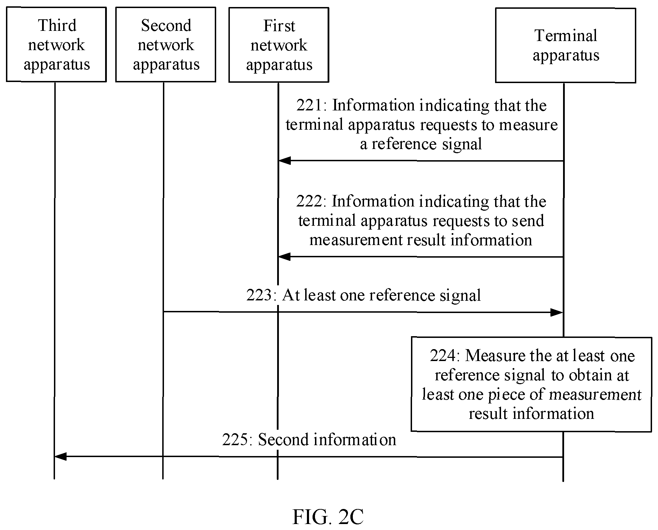

FIG. 2C illustrates a possible schematic flowchart of a communication method according to an embodiment of this application. FIG. 2C may be considered as an embodiment in which FIG. 2A and FIG. 2B are used in combination. For related descriptions of a terminal apparatus, a first network apparatus, a second network apparatus, and a third network apparatus in FIG. 2C, refer to related descriptions in FIG. 2A or FIG. 2B. Details are not described again.

As shown in FIG. 2C, the method includes step 201, step 202, and step 203. The following provides descriptions with reference to FIG. 2A.

Step 221: The terminal apparatus sends, by using a first cell, information indicating that the terminal apparatus requests to measure a reference signal.

Correspondingly, the first network apparatus receives, by using the first cell, the information indicating that the terminal apparatus requests to measure the reference signal.

The information indicating that the terminal apparatus requests to measure the reference signal may be the first information sent by the terminal apparatus in step 201.

For content of step 221, refer to related descriptions of step 201. Details are not described again.

Step 222: The terminal apparatus sends, by using the first cell, information indicating that the terminal apparatus requests to send measurement result information.

Correspondingly, the first network apparatus receives, by using the first cell, the information indicating that the terminal apparatus requests to send the measurement result information.

The information indicating that the terminal apparatus requests to send the measurement result information may be the first information sent by the terminal apparatus in step 211. The information indicating that the terminal apparatus requests to send the measurement result information and the information indicating that the terminal apparatus requests to measure the reference signal may be a same piece of information (in this case, step 221 and step 222 may be a same step), or may be two different pieces of information. A sequence of step 221 and step 222 may also be changed. For example, step 222 may be performed before step 221. The information indicating that the terminal apparatus requests to send the measurement result information and the information indicating that the terminal apparatus requests to measure the reference signal may be carried in a same message or respectively carried in two messages.

For content of step 222, refer to related descriptions of step 211. Details are not described again.

Step 223: The second network apparatus sends at least one reference signal by using a second cell.

Correspondingly, the terminal apparatus receives the at least one reference signal by using the second cell.

For content of step 223, refer to related descriptions of step 202. Details are not described again.

Step 224: The terminal apparatus measures the at least one reference signal to obtain at least one piece of measurement result information.

For content of step 224, refer to related descriptions of step 203. Details are not described again.

Step 225: The terminal apparatus sends second information by using a third cell.

Correspondingly, the third network apparatus receives the second information by using the third cell.

In embodiments of this application, the third cell may be the same as or different from the first cell. The third cell may be the same as or different from the second cell. In this embodiment of this application, the second information includes the at least one piece of measurement result information. The second information may include a part or all of the at least one piece of measurement result information obtained by the terminal apparatus in step 224. Alternatively, the second information does not include any one of the at least one piece of measurement result information obtained by the terminal apparatus in step 224. For example, the measurement result information included in the second information may include measurement result information obtained by a reference signal measurement process triggered by a network apparatus, or measurement result information obtained by a reference signal measurement process previously triggered by the terminal apparatus.

For content of step 225, refer to related descriptions of step 212. Details are not described again.

It can be learned from the solution provided in FIG. 2C that, in this embodiment of this application, the terminal apparatus may trigger reference signal measurement and sending of the measurement result information by using one piece of information or a plurality of pieces of information. In this way, a subsequent beam switching process can be accelerated, and communication interruptions can be reduced.

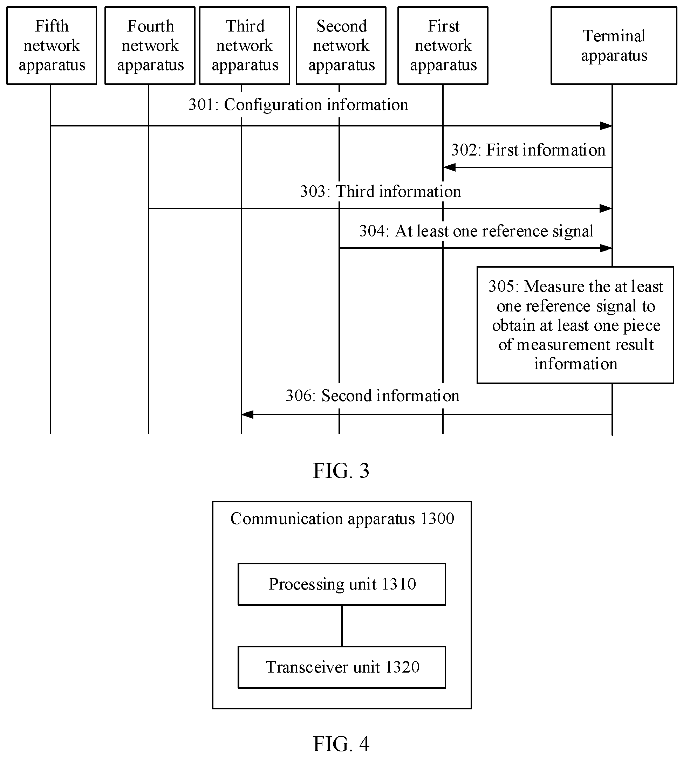

Based on the solutions provided in FIG. 1, FIG. 2A, FIG. 2B, and FIG. 2C, the following separately describes, by using FIG. 3 as an example, a schematic flowchart of a communication method according to an embodiment of this application. FIG. 3 may be considered as an extended embodiment of FIG. 2A, FIG. 2B, or FIG. 2C. For related content of a terminal apparatus, a first network apparatus, a second network apparatus, and a third network apparatus in FIG. 3, refer to related descriptions in FIG. 2A, FIG. 2B, or FIG. 2C. Details are not described again. A fourth network apparatus and a fifth network apparatus in FIG. 3 may be the network device (for example, the RAN node, the CU, or the DU) shown in FIG. 1 or a chip in the network device (for example, a chip in the RAN node, or a chip in the CU or the DU).

The following provides descriptions with reference to FIG. 3. In a possible implementation, the embodiment shown in FIG. 3 includes step 302, step 304, and step 305. In another possible implementation, the embodiment shown in FIG. 3 includes step 302 and step 306. Optionally, the embodiment shown in FIG. 3 may further include one or more of step 301, step 303, and step 305.

Step 301: The fifth network apparatus sends configuration information.

Correspondingly, the terminal apparatus receives the configuration information.

In a possible implementation, the configuration information may be sent by using a radio resource control (Radio resource control, RRC) message.

The configuration information may include a plurality of pieces of content. For example, the configuration information may include one or more of the following: information indicating a scheduling resource (information A1), information indicating a reference signal resource (information A2), information indicating a cell that the terminal apparatus requests to measure (information A3), indication information of a cell used to send measurement result information (information A4), indication information of a resource used to send the measurement result information (information A5), information indicating a cell to which a reference signal corresponding to the measurement result information that the terminal apparatus requests to send belongs (information A6), and information indicating a feature of a reference signal that the terminal apparatus requests to measure (information A7).

The configuration information may further configure an association relationship (for example, information A8) between any plurality of the following: the scheduling resource (for example, the first resource), a cell (for example, the second cell) that the terminal apparatus requests to measure, the reference signal resource, the cell used to send the measurement result information, the resource used to send the measurement result information, and the cell to which the reference signal corresponding to the measurement result information that the terminal apparatus requests to send belongs. For example, the configuration information may be used to configure an association relationship between the scheduling resource (for example, the first resource) and a trigger state. The trigger state may be understood as the information indicating the reference signal resource (the information A2). For details, refer to subsequent detailed descriptions. In this way, if the terminal apparatus sends the first information by using the first resource, the network apparatus side may determine, based on the first resource occupied by the first information, that the terminal apparatus wants to activate (or trigger or enable) a trigger state corresponding to the first resource. Details are described in subsequent content, and details are not described herein again.

### Information A1: information indicating a scheduling resource

For differentiation, in embodiments of this application, a resource used to send a request for reference signal measurement and/or a request for sending measurement result information is referred to as the scheduling resource. The scheduling resource in this specification may be replaced with a resource, a scheduling request resource, a dedicated scheduling request resource, a PUCCH, or a PUSCH. The scheduling resource indicated by the information that is included in the configuration information and that indicates the scheduling resource may be understood as a resource that can be (or is allowed to be, or is recommended to be) used by the terminal apparatus when the terminal apparatus sends the information used to request reference signal measurement and/or the information used to request to send the measurement result information, or a resource that can be (or is allowed to be, or is recommended to be) occupied by such information.

The scheduling resource in embodiments of this application may include a time domain resource and/or a frequency domain resource. For example, the scheduling resource may include a periodicity and an offset of the scheduling resource in time domain (and/or frequency domain).

The information indicating the scheduling resource may include, for example, one or more of an identifier of a PUCCH, an identifier of a scheduling request resource (the identifier of the scheduling request resource may be represented in English as, for example, schedulingRequestResourceId), and an identifier of a scheduling request (the identifier of the scheduling request may be represented in English as, for example, schedulingRequestId). The terminal apparatus may determine the scheduling resource based on the information indicating the scheduling resource. For example, the terminal apparatus may find, based on the identifier of the PUCCH, a resource associated with the identifier of the PUCCH, and the terminal apparatus sends a scheduling request by using the resource, to request reference signal measurement and/or request to send the measurement result information. The information indicating the scheduling resource may further include an identifier of the resource and/or an identifier of a resource set.

The resource (scheduling resource) used to send the information indicating the request for measuring the reference signal may be the same as or different from the resource (scheduling resource) used to send the information indicating the request for sending the measurement result information. It may also be understood as follows: The fourth network apparatus may configure some resources for the terminal apparatus, and the terminal apparatus may send, by using these resources, the information indicating the request for measuring the reference signal and/or information indicating the request for sending the measurement result information. The network apparatus may determine a purpose of the information by determining whether a resource occupied by the information is a scheduling request resource.

In a possible implementation, the information indicating the scheduling resource includes first resource indication information and second resource indication information. The first resource indication information indicates a resource. The first resource indication information includes an identifier of a resource and/or an identifier of a resource set. The resource indicated by the first resource indication information is used to send information indicating a request for measuring a reference signal. The second resource indication information indicates a resource. The second resource indication information may include an identifier of a resource and/or an identifier of a resource set. The resource indicated by the second resource indication information is used to send information indicating a request for sending measurement result information. The following separately describes the first resource indication information and the second resource indication information by using information A1.1 and information A1.2.

### Information A1.1: first resource indication information

For example, if the terminal apparatus sends information by using a resource, and the first network apparatus receives the information, the first network apparatus may determine whether the resource occupied by the information belongs to a resource indicated by the first resource indication information. If the first resource belongs to the resource indicated by the first resource indication information, the first network apparatus may determine that the information is used to request to measure the reference signal, or it may be understood as that the first network apparatus determines, based on the information, that the terminal apparatus wants to trigger measurement of the reference signal. In another possible implementation, if the first resource does not belong to the resource indicated by the first resource indication information, the first network apparatus may determine that the information is not information used to request to measure the reference signal. In this implementation, the information sent by the terminal apparatus may not need additional information to indicate a purpose of the information, thereby reducing signaling overheads.

### Information A1.2: second resource indication information

For example, if the terminal apparatus sends information by using a resource, and the first network apparatus receives the information, the first network apparatus may determine whether the resource occupied by the information belongs to a resource indicated by the second resource indication information. If the first resource belongs to the resource indicated by the second resource indication information, the first network apparatus may determine that the information is used to request to send the measurement result information, or it may be understood as that the first network apparatus determines, based on the information, that the terminal apparatus wants to trigger sending of the measurement result information. In another possible implementation, if the first resource does not belong to the resource indicated by the second resource indication information, the first network apparatus may determine that the information is not information used to request to send the measurement result information. In this implementation, the information sent by the terminal apparatus may not need additional information to indicate a purpose of the information, thereby reducing signaling overheads.

The first resource indication information and the second resource indication information may be two different pieces of information, or may be the same piece of information. For example, the first resource indication information and the second resource indication information are the same. The resource indicated by the first resource indication information may be used to send information indicating a request for measuring the reference signal, or may be used to send information indicating a request for sending the measurement result information. Alternatively, the information sent by using the first resource is used to request to measure the reference signal and also request to send the measurement result information.

In embodiments of this application, the first resource is subsequently involved. For example, information indicating the first resource may include a resource identifier and/or a resource set identifier of the first resource. The information indicating the first resource may belong to the first resource indication information and/or the second resource indication information. Alternatively, it may be understood as that the first resource is used to send the information requesting to measure the reference signal and/or that the first resource is used to send the information requesting to send the measurement result information of the reference signal.

### Information A2: information indicating a reference signal resource

In embodiments of this application, the information, in the configuration information, indicating the reference signal resource may indicate the reference signal resource. The reference signal resource may be understood as a resource that can be (or is allowed to be, or is recommended to be) occupied by the reference signal that the terminal apparatus requests to measure. The terminal apparatus may receive and measure the reference signal on the reference signal resource. In embodiments of this application, the reference signal resource may be replaced with a resource corresponding to the reference signal, a resource occupied by the reference signal, or the like.

In embodiments of this application, the reference signal resource may be indicated by using some information. For example, the information indicating the reference signal resource may include at least one of the following: information indicating a trigger state, information indicating a channel state information report configuration, synchronization signal block index information, an identifier of the reference signal resource, an identifier of a resource set corresponding to the reference signal resource, and an identifier of a resource configuration corresponding to the reference signal resource. In this case, the configuration information may further include information indicating that there is an association relationship between the scheduling resource and the information indicating the reference signal resource.

The information indicating the reference signal resource may specifically include a plurality of types of information. For example, the information indicating the reference signal resource may include one or more of information A2.1, information A2.2, information A2.3, information A2.4, information A2.5, or information A2.6. The information A2.1 is the information indicating the trigger state, the information A2.2 is the information indicating the channel state information report configuration, the information A2.3 is the synchronization signal block index information, the information A2.4 is the identifier of the reference signal resource, the information A2.5 is the identifier of the resource set corresponding to the reference signal resource, and the information A2.6 is the identifier of the resource configuration corresponding to the reference signal resource.

### Information A2.1: information indicating a trigger state

The trigger state in embodiments of this application may be written as trigger state in English. The trigger state in embodiments of this application may also be replaced with trigger state information or trigger state configuration information, or replaced with information. In embodiments of this application, for ease of differentiation, the state is referred to as a trigger state.

In embodiments of this application, one trigger state may correspond to one cell, and a cell corresponding to the trigger state in embodiments of this application may be understood as a cell to which the trigger state belongs. The cell corresponding to the trigger state may include a serving cell, for example, an SCell, a PCell, or a PSCell.

When the cell corresponding to the trigger state is the serving cell, an identifier of the cell corresponding to the trigger state may be carried in a serving cell identifier field in the configuration message. The field may be denoted as serving cell ID in English.

In embodiments of this application, the information indicating the trigger state may include the identifier of the cell corresponding to the trigger state. The information indicating the trigger state may further include other information, for example, an identifier of the trigger state.

For example, the information indicating the trigger state is the identifier of the cell (for example, the serving cell) corresponding to the trigger state, for example, an identifier of CC0. In this case, the identifier of the cell indicates the trigger state corresponding to CC0. Alternatively, the identifier of the cell indicates the trigger state of the corresponding cell (for example, the serving cell) that is CC0.

The trigger state in embodiments of this application may be associated with the resource or the resource set, and the trigger state may be associated with the reference signal resource. Therefore, the information indicating the trigger state in embodiments of this application may be considered as the information indicating the reference signal resource.

The following describes a form of information that may be included in the trigger state.

For example, one or more trigger states may be configured in the configuration information. For example, the configuration information may be used to configure a channel state information trigger state list. The list may be denoted as CSI-TriggerStateList. The list may include a plurality of trigger states.

One trigger state may include one or more (for example, no more than 16) pieces of channel state information associated report configuration information (the channel state information associated report configuration information may be denoted as CSI-AssociatedReportConfigInfo).

One piece of channel state information associated report configuration information may include one report configuration identifier (the information may be denoted as reportConfigId) and one piece of channel resource information (the channel resource information may be denoted as resourcesForChannel). The report configuration identifier and the channel resource information in the channel state information associated report configuration information may be associated with each other.

The channel resource information may be associated with the resource set or the resource. For example, the channel resource information may be associated with a CSI-RS resource set, a non-zero power CSI-RS (non-zero power CSI-RS, NZP-CSI-RS) resource set, a zero power CSI-RS (zero power CSI-RS, ZP-CSI-RS) resource set, a CSI interference measurement (CSI interference measurement, CSI-IM) resource set, or a CSI synchronization signal block (CSI signal synchronization signal block, CSI-SSB) resource set. The resource set in embodiments of this application may be denoted as a resource set.

The resource (or a resource in the resource set) associated with the channel resource information may be understood as the reference signal resource. For example, the channel resource information is associated with the resource set, and the channel resource information may include the identifier of the resource set. The resource set (which may also be referred to as configuration information of the resource set) associated with the channel resource information may also include the identifier of the resource set. In this way, the terminal apparatus or the network apparatus can find, based on the channel resource information, the resource set associated with the channel resource information. A resource set associated with one piece of channel resource information may include a related parameter (or information) of a resource. For example, the resource set (or may be referred to as configuration information of the resource set) may further include an index of the resource set. The index of the resource set may include, for example, an identifier of the CSI-RS resource set, an identifier of the NZP-CSI-RS resource set, an identifier of the ZP-CSI-RS resource set, an identifier of the CSI-IM resource set, or an identifier of the CSI-SSB resource set.

A plurality of types of information may be configured in one resource set. For example, at least one of the following may be configured: one or more resources (for example, SSB resources or CSI-RS resources), whether repetition is performed (where the repetition may be written as repetition in English, the repetition may include two states: enabled and disabled, the enabled state may be represented by on in English, the disabled state may be represented by off in English, information about whether repetition is performed may also be understood as whether the repetition is on or off, that the repetition is on may also be understood as that resources in the resource set are sent by using a same downlink spatial domain filter, and that the repetition is off may also be understood as that the resources in the resource set do not need to be sent by using the same downlink spatial filter), a periodic triggering delay (which may be denoted as aperiodicTriggeringOffset in English), same antenna ports corresponding to all NZP-CSI-RS resources in the CSI-RS resource set (which may also be represented as trs-info), and spatial relation information (which may be denoted as QCL-info).

The report configuration identifier may be understood as an example of the information indicating the channel state information report configuration. The report configuration identifier may also be referred to as an identifier of the channel state information report configuration. The report configuration identifier may correspond to one channel state information report configuration (the channel state information report configuration in embodiments of this application may be denoted as CSI-ReportConfig, and the channel state information report configuration in embodiments of this application may be replaced with a channel state information report, or replaced with channel state information report information, or replaced with channel state information report configuration information, or replaced with information, or the like). One channel state information report configuration may include a report configuration identifier, so that the terminal apparatus or the network apparatus finds, based on the report configuration identifier, the channel state information report configuration corresponding to the report configuration identifier.

In a possible implementation, one channel state information report configuration may further include the information indicating a cell to which a reference signal resource belongs, and the reference signal resource may be a resource of a reference signal indicated in the channel resource information associated with the channel state information report configuration. Information about the cell to which the reference signal resource belongs may be carried in a field of the channel state information report configuration, and the field may be denoted as, for example, a carrier field in English. For example, if the channel state information report configuration indicates that the cell to which the reference signal resource belongs is CC2, when the channel state information is activated (or triggered, or enabled), a cell to which a resource of a reference signal that the terminal apparatus requests to measure belongs is CC2. This may also be understood as that the terminal apparatus requests to measure a reference signal of CC2.

In another possible implementation, the channel state information report configuration may further include a related parameter (or information) of the measurement result information sent by the terminal apparatus. For example, the channel state information report configuration may include at least one of a report configuration type (which may be denoted as reportConfigType), a report quantity (which may be denoted as reportQuantity), group-based beam reporting (which may be denoted as groupBaseBeamReporting), or a channel measurement resource (which may be denoted as resourceForChannelMeasurement).

### Information A2.2: information indicating channel state information report configuration

One channel state information report configuration (which may be denoted as CSI-ReportConfig) may correspond to one cell. A cell corresponding to the channel state information report configuration in embodiments of this application may be understood as a cell to which the channel state information report configuration belongs. The cell corresponding to the channel state information report configuration may include a serving cell, for example, an SCell, a PCell, or a PSCell. When the cell corresponding to the channel state information report configuration is a serving cell, an identifier of the cell corresponding to the channel state information report configuration may be carried in a serving cell identifier field in a configuration message, and the field may be denoted as serving cell ID in English.

In embodiments of this application, the information indicating the channel state information report configuration may include an identifier of a cell corresponding to the channel state information report configuration. The information indicating the channel state information report configuration may further include other information, for example, an identifier of the channel state information report configuration.

For example, the information indicating the channel state information report configuration is an identifier of a cell (for example, a serving cell) corresponding to the channel state information report configuration, for example, an identifier of CC0. In this case, the identifier of the cell indicates the channel state information report configuration corresponding to CC0. Alternatively, the identifier of the cell indicates the channel state information report configuration of the corresponding cell (for example, the serving cell) that is CC0.

The information indicating the channel state information report configuration may be associated with the resource or the resource set, and the channel state information report configuration may be associated with the reference signal resource. Therefore, in embodiments of this application, the information indicating the channel state information report configuration may be considered as the information indicating the reference signal resource.

For example, the channel state information report configuration is associated with channel resource information (which may be denoted as resourcesForChannel) in the trigger state, and a resource indicated by the channel state information report configuration is a resource indicated by the channel resource information.

For related content of the channel state report configuration, the channel resource information, and the trigger state, refer to related descriptions in the information A2.1. Details are not described again. The channel state information report configuration in embodiments of this application may be configured in the trigger state, or may be separately configured, that is, may not be configured in the trigger state.

### Information A2.3: synchronization signal block index information

A synchronization signal block in embodiments of this application may include an SSB. The synchronization signal block index information includes information indicating the synchronization signal block.

When the synchronization signal block index information serves as the information indicating the reference signal resource, the reference signal resource may be a resource associated with the synchronization signal block. For example, the reference signal resource is an SSB-associated resource. The SSB-associated resource includes an SSB-associated resource associated with a CSI-RS resource set and/or an SRS resource set. Alternatively, the SSB-associated resource includes an SSB-associated CSI-RS resource and/or SRS resource. Optionally, the network device side (for example, the fifth network apparatus) may further configure an association relationship between an SSB and a CSI-RS resource (and/or an SRS resource), and/or the network device further configures an association relationship between an SSB and a CSI-RS resource set (and/or an SRS resource set).

### Information A2.4: identifier of a reference signal resource

The identifier of the reference signal resource may include, for example, at least one of an identifier of a CSI-RS resource, an identifier of an SRS resource, and an identifier of an SSB resource. The reference signal resource may include a resource indicated by the identifier of the reference signal resource.

The identifier of the reference signal resource may be configured in the configuration information.

Information A2.5: identifier of a resource set corresponding to a reference signal resource

The resource set in embodiments of this application may be written as resource set in English. The identifier of the resource set of the reference signal resource may include, for example, at least one of an identifier of a CSI-RS resource set, an identifier of an SRS resource set, and an identifier of an SSB resource set.

Information A2.6: identifier of a resource configuration corresponding to a reference signal resource

The resource configuration in embodiments of this application may be written as resource setting in English. The resource configuration may be associated with a resource set or a resource. When the identifier of the resource configuration serves as the information indicating the reference signal resource, the reference signal resource may be a resource associated with the identifier of the resource configuration. The resource associated with the identifier of the resource configuration may include, for example, at least one of an identifier of a CSI-RS resource set, an identifier of an SRS resource set, an identifier of an SSB resource set, an identifier of a CSI-RS resource, an identifier of an SRS resource, and an identifier of an SSB resource.

### Information A3: information indicating a cell that a terminal apparatus requests to measure

The information, in the configuration information, indicating the cell that the terminal apparatus requests to measure may indicate the cell that the terminal apparatus requests to measure. The cell may also be understood as a cell that the terminal apparatus can (or is allowed to, or is recommended to) request to measure.

The information indicating the cell that the terminal apparatus requests to measure may include, for example, an identifier of the cell.

In embodiments of this application, the information indicating the cell that the terminal apparatus requests to measure may further include other information, for example, may include the information indicating the trigger state. The trigger state is associated with the cell that the terminal apparatus requests to measure. For example, identification information of a cell carried in the carrier field mentioned in the foregoing information A2.1 may be identification information of the cell that the terminal apparatus requests to measure and that is associated with the trigger state.

In embodiments of this application, the information indicating the cell that the terminal apparatus requests to measure may further include other information, for example, may include the information indicating the channel state information report configuration. The channel state information report configuration is associated with the cell that the terminal apparatus requests to measure. For example, identification information of a cell that is carried in the carrier field (refer to the foregoing information A2.1) in the trigger state and that is associated with the channel state information report configuration may be identification information of the cell that the terminal apparatus requests to measure and that is associated with the trigger state.

Information A4: indication information of a cell used to send measurement result information

The indication information, in the configuration information, of the cell used to send the measurement result information may indicate the cell used to send the measurement result information. The cell may also be understood as a cell in which the terminal apparatus can (or is allowed to, or is recommended to) request to send the measurement result information. The cell is used by the terminal apparatus to send the measurement result information. However, the measurement result information may include measurement result information of the cell, or may not include measurement result information of the cell, or may include measurement result information of another cell.

The indication information of the cell used to send the measurement result information may include, for example, an identifier of the cell.

### Information A5: indication information of a resource used to send measurement result information

The indication information that is of the resource used to send the measurement result information and that is included in the configuration information may indicate the resource used to send the measurement result information. The reference signal resource may be understood as a resource that the terminal apparatus can (or is allowed to, or is recommended to) occupy when the terminal apparatus requests to send the measurement result information (or signaling carrying the measurement result information).

The indication information of the resource used to send the measurement result information may include, for example, at least one of an identifier of a resource, an identifier of a resource set, and an identifier of a resource configuration. For example, a resource used to send the measurement result information may be, for example, a PUSCH resource and/or a PUCCH resource; the resource used to send the measurement result information may be an uplink resource, and the resource may include a time domain resource and/or a frequency domain resource; and for another example, a reporting periodicity and an offset are configured.

### Information A6: information indicating a cell to which a reference signal corresponding to measurement result information that a terminal apparatus requests to send belongs

The information, in the configuration information, indicating the cell to which the reference signal corresponding to the measurement result information that the terminal apparatus requests to send belongs may indicate the cell to which the reference signal corresponding to the measurement result information that the terminal apparatus requests to send belongs. The cell may also be understood as a cell (one or more cells) corresponding to measurement result information that the terminal apparatus can (or is allowed to, or is recommended to) request to send. The measurement result information of the cell may be sent by using another cell or the current cell.

The information indicating the cell to which the reference signal corresponding to the measurement result information that the terminal apparatus requests to send belongs may include, for example, an identifier of the cell. In embodiments of this application, the cell to which the reference signal corresponding to the measurement result information belongs may also be understood as: The measurement result information is obtained by measuring the reference signal of the cell.

In a possible implementation, the cell (the cell indicated by the information A3) that the terminal apparatus requests to measure is the same as or different from the cell (the cell indicated by the information A6) to which the reference signal corresponding to the measurement result information that the terminal apparatus requests to send belongs. When the cell (the cell indicated by the information A3) that the terminal apparatus requests to measure is the same as the cell (the cell indicated by the information A6) to which the reference signal corresponding to the measurement result information that the terminal apparatus requests to send belongs, the information A3 and the information A6 may be the same information or two pieces of information. In a possible implementation, when the cell (the cell indicated by the information A3) that the terminal apparatus requests to measure is the same as the cell (the cell indicated by the information A6) to which the reference signal corresponding to the measurement result information that the terminal apparatus requests to send belongs, the information A6 may be the information indicating the channel state information report configuration. Specifically, the information A6 may be the identification information of the cell that is carried in the carrier field (refer to the foregoing information A2.1) in the trigger state and that is associated with the channel state information report configuration.

### Information A7: information indicating a feature of a reference signal that a terminal apparatus requests to measure

The information, in the configuration information, indicating the feature of the reference signal that the terminal apparatus requests to measure may indicate the feature of the reference signal that the terminal apparatus requests to measure. The feature of the reference signal may also be understood as the feature of the reference signal that the terminal apparatus can (or is allowed to, or is recommended to) request to measure.

In embodiments of this application, the feature of the reference signal (in the information A7) may include one or more of the following: a spatial relation of reference signals (for example, the following information A7.1), whether reference signals can be simultaneously received by the terminal apparatus (for example, the following information A7.2), whether the spatial relation corresponding to the reference signals can be applied by the terminal apparatus to simultaneous sending (for example, the following information A7.3), whether the reference signals belong to a specific quantity (for example, one or more) of transmission reception points (for example, the following information A7.4), and the like. For example, if the information indicating the reference signal resource may include the information A7.2 and the information A7.3, the feature of the reference signal includes: whether the reference signals can be simultaneously received by the terminal apparatus (for example, the information A7.2), and whether the spatial relation corresponding to the reference signals can be applied by the terminal apparatus to simultaneous sending (for example, the information A7.3). The features of the reference signals can make the reference signals sent by the network apparatus side better match actual requirements of the terminal apparatus.

Information A7.1: A plurality of reference signals that the terminal apparatus requests to measure are sent by using a same downlink spatial domain filter.

In a possible implementation, the information A7.1 may be understood as that repetition in channel resource information (for example, channel resource information associated with a trigger state) needs to be set to an enabled (for example, on) state. If a plurality of reference signal sent by the network apparatus side meet a requirement of the information A7.1, the network apparatus side may repeatedly send the reference signal by using a same beam, and the terminal apparatus may receive the reference signal by using different reception beams in turn. Then, the terminal apparatus may measure quality of different reception beams in turn.

That the plurality of reference signals are sent by using the same downlink spatial domain filter may be correspondingly written in English as: Resources are transmitted with the same downlink spatial domain transmission filter.

Information A7.2: A plurality of reference signals that the terminal apparatus requests to measure can be simultaneously received by the terminal apparatus.

The information A7.2 may also be replaced with that resources of the plurality of reference signals that the terminal apparatus requests to measure can be simultaneously received by the terminal apparatus, and correspondingly, may be denoted in English as: resources can be received simultaneously by the UE.

Information A7.3: A spatial domain filter corresponding to a plurality of reference signals that the terminal apparatus requests to measure can be applied by the terminal apparatus to simultaneous sending.

For example, the plurality of reference signals correspond to a plurality of (for example, two) spatial domain filters. The terminal apparatus may simultaneously send a plurality of signals by using the plurality of spatial domain filters.

Information A7.4: A resource of a reference signal that the terminal apparatus requests to measure belongs to a reference signal resource associated with N transmission reception points (transmission reception points, TRPs), where N is a positive integer.

For example, N may be 1, or 2, or another value.

Alternatively, the information A7.4 may be replaced with: Resources of reference signals that the terminal apparatus requests to measure are a plurality of reference signal resources that are separately associated with N control resource set pool indexes (the control resource set pool index may be denoted as coresetpoolindex).

Alternatively, the information A7.4 may be replaced with: Resources of reference signals that the terminal apparatus requests to measure are a plurality of reference signal resources that are separately associated with a serving cell and a non-serving cell (whose cell identifier is different from that of the serving cell, for example, an additional PCI (additionalPCI)).

Alternatively, the information A7.4 may be replaced with: Resources of reference signals that the terminal apparatus requests to measure are reference signal resources that separately belong to two SRS resource sets, where the two resource sets are used for codebook-based or non-codebook-based measurement.

Alternatively, the information A7.4 may be replaced with: Resources of reference signals that the terminal apparatus requests to measure are reference signal resources that separately belong to two CSI/SSB resource sets.

Information A8: information indicating an association relationship between any plurality of the following: a scheduling resource (for example, a first resource), a cell (for example, a second cell) that a terminal apparatus requests to measure, a reference signal resource, a cell used to send measurement result information, a resource used to send the measurement result information, and a cell to which a reference signal corresponding to the measurement result information that the terminal apparatus requests to send belongs.

The information A8 may be understood as information indicating an association relationship between any plurality of the information A1, the information A2, the information A3, the information A4, the information A5, the information A6, and the information A7. In this way, the terminal apparatus may indicate some information in the plurality of pieces of information that have an association relationship, to achieve an effect of reducing signaling overheads. The following provides several examples. For another example in which any two or more items have an association relationship, refer to the following examples. Details are not described again.

Example 1: The configuration information includes information indicating that a scheduling resource is associated with information (for example, an identifier of a reference signal resource, or for example, a trigger state) indicating a reference signal resource. These association relationships may be represented in a form of a table or another form.

For example, the at least one scheduling resource indicated by the configuration information includes the first resource, and the configuration information may further include information indicating an association relationship between the first resource and the information (for example, the identifier of the reference signal resource, or for example, the trigger state) indicating the reference signal resource. The terminal apparatus sends the first information by using the first resource. The first network apparatus receives the first information, and the first network apparatus may search the configuration information for the information (for example, the identifier of the reference signal resource, or for example, the trigger state) that indicates the reference signal resource and that is associated with the first resource. The information indicating the reference signal resource is information (for example, the identifier of the reference signal resource, or for example, the trigger state) that indicates the reference signal resource, that the terminal apparatus requests to activate (or trigger, or enable), and that is determined by the first network apparatus. It may also be understood that the reference signal resource indicated by the information indicating the reference signal resource is the resource of the reference signal that the terminal apparatus requests to measure and that is determined by the first network apparatus. It can be learned that, in this solution, the terminal apparatus may not need to add, to the first information, the information indicating the reference signal resource, thereby reducing signaling overheads.

In embodiments of this application, a network apparatus subsequently configured to receive the first information is the first network apparatus, and the first network apparatus and the fifth network apparatus may be a same network apparatus, or two apparatuses of a same physical device. The first network apparatus may obtain the configuration information. For example, the first network apparatus may obtain the configuration information by performing signaling interaction with the fifth network apparatus, or the first network apparatus may obtain the configuration information without performing signaling interaction with the fifth network apparatus.

Example 2: The configuration information further indicates that there is an association relationship between the scheduling resource and the information indicating the reference signal resource.

For example, the information indicating the reference signal resource includes the trigger state. In this case, the configuration information may include information indicating that there is an association relationship between the scheduling resource and the trigger state. The association relationship between the scheduling resource and the trigger state may be indicated in an explicit manner, or may be indicated in an implicit manner. For a related solution, refer to the foregoing solution in which the configuration information indicates the association relationship between the scheduling resource and the reference signal resource. This is similar to the foregoing solution, and details are not described again.

For example, the at least one scheduling resource indicated by the configuration information includes the first resource, and the configuration information may further include the information indicating the trigger state. In another possible implementation, the configuration information may further include the information indicating the association relationship between the first resource and the trigger state. The terminal apparatus sends the first information by using the first resource. The first network apparatus receives the first information, and the first network apparatus may search the configuration information for the trigger state associated with the first resource. In this case, the first network apparatus may determine a trigger state that the terminal apparatus requests to enable (or activate, or trigger). It can be learned that, in this solution, the terminal apparatus may not need to add, to the first information, the information indicating the trigger state, thereby reducing signaling overheads.

In the foregoing example, an example in which there is an association relationship between the scheduling resource and other information is used for description. In actual application, there may be an association relationship between any two or more pieces of information. For example, there is an association relationship between the information indicating the reference signal resource (the information A2) and the information indicating the feature of the reference signal that the terminal apparatus requests to measure (the information A1). When the terminal apparatus sends the information indicating the reference signal resource, the network apparatus may determine, based on the information, the feature of the reference signal that the terminal apparatus requests to measure. In this solution, the terminal apparatus does not need to send the information indicating the feature of the reference signal that the terminal apparatus requests to measure, thereby reducing signaling overheads. For a related example of an association relationship between any plurality of the information A1, the information A2, the information A3, the information A4, the information A5, the information A6, and the information A7, refer to the foregoing examples and related descriptions of the information A1, the information A2, the information A3, the information A4, the information A5, the information A6, and the information A7. Details are not described again.

The association relationship between any plurality of the information A1, the information A2, the information A3, the information A4, the information A5, the information A6, and the information A7 may be indicated in an explicit manner, or may be indicated in an implicit manner.

For example, there is an association relationship between the scheduling resource and the information (for example, the identifier of the reference signal resource, or for example, the trigger state) indicating the reference signal resource.

In a possible implementation, the configuration information includes at least one piece of information indicating the scheduling resource and at least one piece of information indicating the reference signal resource. There is a correspondence between the scheduling resource and one or more pieces of information (for example, identifiers of the reference signal resources, or for example, trigger states) indicating the reference signal resource. The correspondence may be specified in a protocol or preconfigured or preset for the terminal apparatus. For example, the terminal apparatus determines, based on a ranking (for example, a first ranking) of the information indicating the scheduling resource in the at least one piece of information indicating the scheduling resource in the configuration information, information indicating a reference signal resource corresponding to the scheduling resource. For example, the reference signal resource is information (for example, an identifier of the reference signal resource, or for example, a trigger state) that is ranked first in the at least one piece of information indicating the reference signal resource in the configuration information.

In another possible implementation, the configuration information includes information indicating that there is an association relationship between the scheduling resource and the information (for example, the identifier of the reference signal resource, or for example, the trigger state) indicating the reference signal resource.

For another example, there is an association relationship between the scheduling resource and the information indicating the cell that the terminal apparatus requests to measure.

In a possible implementation, the configuration information includes information indicating at least one scheduling resource, and information indicating at least one cell. The at least one cell is the cell that the terminal apparatus requests to measure. There is a correspondence between the at least one scheduling resource and the at least one cell. The correspondence may be specified in a protocol or preconfigured or preset for the terminal apparatus. For example, one scheduling resource corresponds to one or two cells. The terminal apparatus may determine, based on a ranking of a scheduling resource indicated by the information indicating the at least one scheduling resource and a ranking of a cell indicated by the information indicating the cell, the cell corresponding to the scheduling resource.

In another possible implementation, the configuration information includes some information, and the information is used to associate the scheduling resource with the cell. The cell is the cell that the terminal apparatus requests to measure. These association relationships may be represented in a form of a table or another form. Subsequently, the terminal apparatus may send information by using the scheduling resource, so that the first network apparatus determines, based on the scheduling resource and these association relationships, the cell that the terminal apparatus requests to measure, thereby reducing signaling overheads.

In another possible implementation, the configuration information includes at least one channel state information report configuration, where the at least one channel state information report configuration includes one channel state report configuration, denoted as a channel state information report configuration #1, and the channel state information report configuration #1 corresponds to one cell (denoted as a cell #1). It may be understood that the channel state information report configuration #1 belongs to or is from the cell #1, and may be specifically denoted as the channel state information report configuration #1 of the cell #1.

The channel state information report configuration #1 of the cell #1 is associated with at least one of the following:
a reference signal resource of a cell #2 (for example, an identifier of a reference signal resource associated with the cell #2, or an identifier of a resource set corresponding to a reference signal resource associated with the cell #2, or an identifier of a resource configuration corresponding to a reference signal resource associated with the cell #2);
the first resource;
information about a cell (for example, a first cell) to which the first resource belongs; and
a second resource.

For example, the terminal device sends the first information by using the first resource of the first cell, where the first information indicates that a measurement result is requested to be sent; and then the terminal device sends a measurement result of the reference signal resource of the cell #2 on the second resource.

A related example of another association relationship between the information A1, the information A2, the information A3, the information A4, the information A5, the information A6, and the information A7 is similar to this, and details are not described again.

Step 302: The terminal apparatus sends the first information by using the first cell.

Correspondingly, the first network apparatus receives the first information by using the first cell.

The first information indicates that the terminal apparatus requests to measure the reference signal. Alternatively, the first information is used to request to send the measurement result information. Alternatively, the first information is used to request to measure the reference signal and send the measurement result information.

In a possible implementation, the first information may include one or more of the following: information B1, information B2, information B3, information B4, information B5, information B6, information B7, and information B8. For example, when the first information at least indicates that the terminal apparatus requests to measure the reference signal, the first information may include at least one of information indicating a reference signal resource (information B1), information indicating a cell (for example, the second cell) that the terminal apparatus requests to measure (information B2), information indicating a feature of a reference signal that the terminal apparatus requests to measure (information B3), and information indicating that the terminal apparatus requests to measure the reference signal (information B7). For another example, when the first information at least indicates that the terminal apparatus requests to send the measurement result information, the first information may include at least one of indication information of a cell used to send the measurement result information (information B4), indication information of a resource for sending the measurement result information (information B5), information indicating a cell to which a reference signal corresponding to the measurement result information that the terminal apparatus requests to send belongs (information B6), and information indicating that the terminal apparatus requests to send the measurement result information (information B8).

The following separately describes the several pieces of information.

Information B1: information indicating a reference signal resource

The information, in the first information, indicating the reference signal resource may indicate the reference signal resource. The resource may be understood as a resource corresponding to the reference signal that the terminal apparatus requests to measure by using the first information. The resource may belong to the reference signal resource indicated by the configuration information. Alternatively, the resource may not belong to the reference signal resource indicated by the configuration information. For example, the configuration information does not indicate the reference signal resource, or step 301 is not performed.

The information indicating the reference signal resource may include one or more of information indicating a trigger state (refer to the information A2.1), information indicating a channel state information report configuration (refer to the information A2.2), synchronization signal block index information (refer to the information A2.3), an identifier of a reference signal resource (refer to the information A2.4), an identifier of a resource set corresponding to a reference signal resource (refer to the information A2.5), or an identifier of a resource configuration corresponding to a reference signal resource (refer to the information A2.6).

When the first information includes the information indicating the trigger state (refer to the information A2.1), the first information further indicates that the resource of the reference signal that the terminal apparatus requests to measure includes a resource associated with the trigger state (for example, a resource associated with channel resource information associated with the trigger state).

When the first information includes the information indicating the channel state information report configuration (refer to the information A2.2), the first information further indicates that the resource of the reference signal that the terminal apparatus requests to measure includes a resource associated with the channel state information report configuration (for example, a resource associated with channel resource information associated with a trigger state associated with the channel state information report configuration).

When the first information includes the synchronization signal block index information (refer to the information A2.3), the first information further indicates that the resource of the reference signal that the terminal apparatus requests to measure includes a resource associated with a synchronization signal block (for example, an SSB-associated CSI-RS resource set).

When the first information includes the identifier of the reference signal resource (refer to the information A2.4), the first information further indicates that the resource of the reference signal that the terminal apparatus requests to measure includes a resource associated with the identifier of the reference signal resource (for example, a resource associated with the channel resource information associated with the trigger state).

When the first information includes the identifier of the resource set corresponding to the reference signal resource (refer to the information A2.5), the first information further indicates that the resource of the reference signal that the terminal apparatus requests to measure includes a resource associated with the identifier of the resource set corresponding to the reference signal resource (for example, a resource associated with the channel resource information associated with the trigger state).

When the first information includes the identifier of the resource configuration corresponding to the reference signal resource (refer to the information A2.6), the first information further indicates that the resource of the reference signal that the terminal apparatus requests to measure includes a resource associated with the identifier of the resource configuration (for example, a resource associated with the channel resource information associated with the trigger state).

Related content of the information B1 is similar to related content in the foregoing information A2. For details, refer to the foregoing descriptions. Details are not described again.

Information B2: information indicating a cell (for example, the second cell) that the terminal apparatus requests to measure.

The information, in the first information, indicating the cell that the terminal apparatus requests to measure may indicate the cell that the terminal apparatus requests to measure. The cell may be understood as a cell that the terminal apparatus requests to measure by using the first information. The cell may belong to the cell that is indicated by the configuration information and that the terminal apparatus is allowed (or recommended) to request to measure. Alternatively, the cell may not belong to the cell that is indicated by the configuration information and that the terminal apparatus is allowed (or recommended) to request to measure. For example, the configuration information does not indicate the cell that the terminal apparatus requests to measure, or step 301 is not performed.

For the information B2, refer to related descriptions of the information A3. Details are not described again.

### Information B3: indication information of a cell used to send measurement result information

The indication information, in the first information, of the cell used to send the measurement result information may indicate the cell used to send the measurement result information. The cell may be understood as a cell in which the terminal apparatus requests to send the measurement result information by using the first information. The cell may belong to the cell that is indicated by the configuration information and that the terminal apparatus is allowed (or recommended) to request to measure. Alternatively, the cell may not belong to the cell that is indicated by the configuration information and that the terminal apparatus is allowed (or recommended) to request to measure. For example, the configuration information does not indicate the cell that the terminal apparatus requests to measure, or step 301 is not performed.

For the information B3, refer to related descriptions of the information A4. Details are not described again.

### Information B4: indication information of a resource used to send measurement result information

The indication information, in the first information, of the resource used to send the measurement result information may indicate a resource occupied for sending the measurement result information. The resource may be understood as a resource occupied by signaling that the terminal apparatus requests, by using the first information, to send the measurement result information. The resource may belong to the resource that is indicated by the configuration information and that is used to send the measurement result information. Alternatively, the resource may not belong to the resource that is indicated by the configuration information and that is used to send the measurement result information. For example, the configuration information does not indicate the resource used to send the measurement result information, or step 301 is not performed.

For the information B4, refer to related descriptions of the information A5. Details are not described again.

### Information B5: information indicating a cell to which a reference signal corresponding to measurement result information that a terminal apparatus requests to send belongs

The information, in the first information, indicating the cell to which the reference signal corresponding to the measurement result information that the terminal apparatus requests to send belongs may indicate the cell to which the reference signal corresponding to the measurement result information that the terminal apparatus requests to send belongs. The cell may be understood as a cell corresponding to the measurement result information that the terminal apparatus requests to send by using the first information (the measurement result information is obtained by performing measurement based on the reference signal of the cell). The cell may belong to the cell that is indicated by the configuration information and to which the reference signal corresponding to the measurement result information that the terminal apparatus is allowed (or recommended) to send belongs. Alternatively, the cell may not belong to the cell that is indicated by the configuration information and to which the reference signal corresponding to the measurement result information that the terminal apparatus is allowed (or recommended) to send belongs. For example, the configuration information does not indicate the cell to which the reference signal corresponding to the measurement result information that is sent by the terminal apparatus belongs, or step 301 is not performed.

For the information B5, refer to related descriptions of the information A6. Details are not described again.

### Information B6: information indicating a feature of a reference signal that a terminal apparatus requests to measure

The information, in the first information, indicating the feature of the reference signal that the terminal apparatus requests to measure may indicate the feature of the reference signal that the terminal apparatus requests to measure. The feature may be understood as the feature of the reference signal that the terminal apparatus requests to measure by using the first information. The feature may belong to the feature of the reference signal that is indicated by the configuration information and that the terminal apparatus is allowed (or recommended) to measure. Alternatively, the cell may not belong to the feature of the reference signal that is indicated by the configuration information and that the terminal apparatus is allowed (or recommended) to measure. For example, the configuration information does not indicate the feature of the reference signal that is measured by the terminal apparatus, or step 301 is not performed.

In embodiments of this application, the feature of the reference signal may include one or more of the following: a spatial relation of reference signals (refer to the information A7.1), whether reference signals can be simultaneously received by the terminal apparatus (refer to the information A7.2), whether the spatial relation corresponding to the reference signals can be applied by the terminal apparatus to simultaneous sending (refer to the information A7.3), whether the reference signals belong to a specific quantity (for example, one or more) of transmission reception points (refer to the information A7.4), and the like. For example, the information indicating the feature of the reference signal may include whether the reference signals can be simultaneously received by the terminal apparatus (refer to the information A7.2), and whether the spatial relation corresponding to the reference signals can be applied by the terminal apparatus to simultaneous sending (refer to the information A7.3). The features of the reference signals can make the reference signals sent by the network apparatus side better match actual requirements of the terminal apparatus.

In a possible implementation, a feature identifier (the feature identifier may be replaced with an identifier, index information, or a number) may be set for each of the information B6.1, the information B6.2, the information B6.3, and the information B6.4, and the feature of the reference signal that the terminal apparatus requests to measure may be one or more of these feature identifiers. The first network apparatus may preconfigure an association relationship between a feature identifier and each piece of information, and then determine, based on a feature identifier carried in the first information, a feature of the reference signal corresponding to the feature identifier.

In another possible implementation, the feature of the reference signal that the terminal apparatus requests to measure may be indicated in a form of a bitmap. For example, one feature of a reference signal may correspond to one field in the first information, and one bit in the field corresponds to one information. If the bit is 1, it indicates that the reference signal that the terminal apparatus requests to measure meets a feature corresponding to the bit. If the bit is 0, it indicates that the reference signal that the terminal apparatus requests to measure does not need to meet a feature corresponding to the bit.

For related content of the information B6, refer to related content in the foregoing information A7. Details are not described again.

### Information B7: information indicating that a terminal apparatus requests to measure a reference signal

The first information includes the information indicating that the terminal apparatus requests to measure the reference signal, and the first network apparatus may determine, based on the information, that the first information is used to trigger the terminal apparatus to request to measure the reference signal.

### Information B8: information indicating that a terminal apparatus requests to send measurement result information

The first information includes the indication information of the resource used to send the measurement result information, and the first network apparatus may determine, based on the information, that the first information is used to trigger sending of the measurement result information.

The information B7 and the information B8 may be same information, or may be two pieces of information. If the information B7 and the information B8 are the same information, when the first information includes the information, the first network apparatus may determine, based on the information, that the first information is used to trigger reference signal measurement and trigger sending of the measurement result information.

In another possible implementation, the terminal apparatus may determine a first resource, where the first resource belongs to a scheduling resource. The first resource may be associated with one or more of the information B1, the information B2, the information B3, the information B4, the information B5, the information B6, the information B7, and the information B8. In this way, when the terminal apparatus sends the first information by using the first resource, the first network apparatus may determine, based on the first resource occupied by the first information, information associated with the first resource. For example, that the first resource may be associated with one or more of the information B1, the information B2, the information B3, the information B4, the information B5, the information B6, the information B7, and the information B8 may be understood as follows: The network device may configure one or more of an identifier of a PUCCH of the first resource, a scheduling request resource identifier (for example, the scheduling request resource identifier may be represented as schedulingRequestResourceId in English), and a scheduling request identifier (for example, the scheduling request identifier may be represented as schedulingRequestId in English) to be associated with one or more of the information B1, the information B2, the information B3, the information B4, the information B5, the information B6, the information B7, and the information B8.

For example, if the first resource is associated with the information indicating that the terminal apparatus requests to measure the reference signal (the information B7), it may also be understood that the first resource belongs to a resource indicated by first resource indication information. When the terminal apparatus sends the first information by using the first resource, and the first network apparatus determines that the first resource is associated with the information indicating that the terminal apparatus requests to measure the reference signal (the information B7) (which may also be understood as: the first network apparatus determines that the first resource belongs to the resource indicated by the first resource indication information), the first network apparatus determines that the first information indicates that the terminal apparatus requests to measure the reference signal.

For another example, the first resource is associated with the information indicating the reference signal resource (for example, the trigger state (the information B1)). The terminal apparatus sends the first information by using the first resource. The first network apparatus receives the first information, and the first network apparatus may search the configuration information for the information (for example, search for a trigger state associated with the first resource) that indicates the reference signal resource and that is associated with the first resource. The information (for example, the trigger state) indicating the reference signal resource is information (for example, the trigger state) that indicates the reference signal resource, that the terminal apparatus requests to activate (or trigger, or enable), and that is determined by the first network apparatus. It can be learned that, in this solution, the terminal apparatus may not need to add, to the first information, the information indicating the reference signal resource, thereby reducing signaling overheads.

For another example, the first resource is associated with a cell that the terminal apparatus requests to measure. For example, the cell that the terminal apparatus requests to measure and that is associated with the first resource is the second cell. The association relationship may be configured by using the foregoing configuration information, and the configuration information may further include information indicating the second cell. In another possible implementation, the configuration information may further include information indicating an association relationship between the first resource and the second cell. The terminal apparatus sends the first information by using the first resource. The first network apparatus receives the first information, and the first network apparatus may search the configuration information for a cell that is associated with the first resource and that the terminal apparatus requests to measure, and find that the cell that is associated with the first resource and that the terminal apparatus requests to measure is the second cell. In this case, the first network apparatus may determine that the first information indicates that the terminal apparatus requests to measure the second cell. It can be learned that, in this solution, the terminal apparatus may not need to add, to the first information, the information indicating the cell that the terminal apparatus requests to measure, thereby reducing signaling overheads.

For an example of an association relationship between the first resource and any one or more of the information B1, the information B2, the information B3, the information B4, the information B5, the information B6, the information B7, and the information B8, refer to the foregoing example and related content in step 301. Details are not described again.

In another possible implementation, there may be an association relationship between any plurality of the information B1, the information B2, the information B3, the information B4, the information B5, the information B6, the information B7, and the information B8. The terminal apparatus may indicate information #1 (any one or more of the information B1, the information B2, the information B3, the information B4, the information B5, the information B6, the information B7, and the information B8) to the network apparatus, and the network apparatus may also determine, based on the information #1, other information associated with the information #1. The foregoing example is described by using an example in which the information #1 is the first resource. In actual application, the information #1 may alternatively be other content. For example, the information #1 may be the information indicating the reference signal resource, and the information associated with the information #1 may be any one or more of the information B2, the information B3, the information B4, the information B5, the information B6, the information B7, and the information B8. For related examples, refer to the foregoing descriptions. Details are not described again.

Step 303: The fourth network apparatus sends third information by using a fourth cell.

Correspondingly, the terminal apparatus receives the third information by using the fourth cell.

In a possible implementation, the fourth network apparatus sends the third information only after the first network apparatus receives the first information. In embodiments of this application, the fourth network apparatus and the first network apparatus may be a same network apparatus, or may be two apparatuses of a same physical device. The fourth network apparatus may obtain the first information. For example, the fourth network apparatus may obtain the first information by performing signaling interaction with the first network apparatus, or the fourth network apparatus may obtain the first information without performing signaling interaction with the first network apparatus.

In embodiments of this application, the third information sent by the fourth network apparatus may be understood as response information of the first information, or may be understood as information that is configured by the network apparatus for the terminal apparatus based on reference signal measurement and/or measurement result information reporting initiated by the terminal apparatus. The third information sent by the fourth network apparatus by using the fourth cell may trigger some parameters, for example, a trigger status. These parameters may be the same as or different from parameters requested by using the first information.

Content indicated by the third information may be implemented in a plurality of forms. The following provides examples for description by using an implementation C1 and an implementation C2. In the implementation C1, the third information indicates that the first information is successfully received or not successfully received. In the implementation C2, the third information is used to: trigger the terminal apparatus to measure the reference signal of the second cell, and/or trigger the terminal apparatus to send the measurement result information. The implementation C1 and the implementation C2 may be separately performed or may be performed in combination. For example, the third information indicates that the first information is successfully received, and is used to trigger the terminal apparatus to measure the reference signal of the second cell and/or trigger the terminal apparatus to send the measurement result information.

In the implementation C1, the third information indicates that the first information is successfully received or not successfully received.

In the implementation C1, in a possible implementation, the third information may carry an acknowledgment (Acknowledgement, ACK) or a negative acknowledgment (negative-acknowledgement, NACK). When the third information carries the ACK, the third information may indicate that the first information is successfully received. When the third information carries the NACK, the third information may indicate that the first information is not successfully received.

In another possible implementation, the third information may further indicate whether the terminal apparatus is allowed to use information indicated by the first information. For example, if the first information indicates the cell that the terminal apparatus requests to measure, and the third information carries the ACK (or the third information indicates that the first information is successfully received), the third information indicates that the terminal apparatus is allowed to use the cell that the terminal apparatus requests to measure and that is indicated by the first information; and if the third information carries the NACK (or the third information indicates that the first information is not successfully received), the third information indicates that the terminal apparatus is not allowed to use the cell that the terminal apparatus requests to measure and that is indicated by the first information.

In the implementation C2, the third information is used to: trigger the terminal apparatus to measure the reference signal of the second cell, and/or trigger the terminal apparatus to send the measurement result information.

Content of the implementation C2 may correspond to the first information. For example, when the first information is used to request to measure the reference signal of the second cell, the third information may trigger the terminal apparatus to measure the reference signal of the second cell; or the third information may trigger the terminal apparatus to measure the reference signal of the second cell, and trigger the terminal apparatus to send the measurement result information. For another example, when the first information is used to request to send the measurement result information, the third information may trigger the terminal apparatus to send the measurement result information; or the third information may trigger the terminal apparatus to measure the reference signal of the second cell, and trigger the terminal apparatus to send the measurement result information.

The third information may include a plurality of pieces of information. For example, the third information may include one or more of the following: information C2.1, information C2.2, information C2.3, information C2.4, information C2.5, information C2.6, information C2.7, and information C2.8. For example, when the third information is at least used to trigger the terminal apparatus to measure the reference signal, the third information may include at least one of the information indicating the reference signal resource (the information C2.1), information indicating a cell (for example, the second cell) measured by the terminal apparatus (the information C2.2), information indicating a feature of a reference signal measured by the terminal apparatus (the information C2.3), and information indicating that the terminal apparatus measures the reference signal (the information C2.7). For another example, when the third information is at least used to trigger the terminal apparatus to send the measurement result information, the third information may include at least one of the following: information indicating a cell in which the terminal apparatus sends the measurement result information (the information C2.4), information indicating a resource for sending the measurement result information by the terminal apparatus (the information C2.5), information indicating a cell to which a reference signal corresponding to the measurement result information sent by the terminal apparatus belongs (the information C2.6), and information indicating that the terminal apparatus sends the measurement result information (the information C2.8).

### Information C2.1: information indicating a reference signal resource

The information, in the third information, indicating the reference signal resource may indicate the reference signal resource. The resource may be understood as a resource that is occupied by a reference signal that the fourth network apparatus recommends (or indicates, or allows) the terminal apparatus to measure.

The information indicating the reference signal resource may include one or more of information indicating a trigger state (refer to information A2.1), information indicating a channel state information report configuration (refer to information A2.2), synchronization signal block index information (refer to information A2.3), an identifier of a reference signal resource (refer to information A2.4), an identifier of a resource set corresponding to a reference signal resource (refer to information A2.5), or an identifier of a resource configuration corresponding to a reference signal resource (refer to information A2.6).

The cell corresponding to the trigger state indicated by the information indicating the trigger state may be the same as or different from the fourth cell. The third information may be a media access control element (media access control element, MAC CE) or DCI. For example, the third information is the DCI, the DCI carries an identifier of CC#2, and the DCI is used to trigger a trigger state corresponding to CC#2. It may also be understood that CC#2 is a cell (for example, a serving cell) corresponding to the trigger state. The DCI is sent by the fourth network apparatus by using CC#1, and CC#1 and CC#2 may be two different (or same) cells. It can be learned from this example that, the fourth network apparatus may trigger (or activate) a trigger state of another cell by using DCI sent by using one cell, so that flexibility of the solution can be improved. In addition, a cell used to transmit the DCI may be a cell with good communication quality or that is not affected, so that a success rate of receiving the DCI can be improved.

In another possible implementation, the terminal apparatus may further receive one piece of information indicating the trigger state. For example, the third information is, for example, the DCI. Before receiving the DCI, the terminal apparatus may further receive a MAC CE. For example, the fourth network apparatus sends the MAC CE to the terminal apparatus. The MAC CE may indicate a cell to which a triggered (or activated) trigger state belongs. For example, the MAC CE includes a field of a cell identifier, and the cell identifier carried in the field is a cell corresponding to the trigger state indicated in the DCI (for example, the CSI request field in the DCI). Similarly, the cell (for example, CC#2) to which the triggered (or activated) trigger state indicated by the MAC CE belongs may be different from or the same as the cell (for example, CC#1) in which the MAC CE is sent (or the cell in which the DCI is sent).

In a possible implementation, when the fourth cell is different from the cell corresponding to the trigger state and/or the cell corresponding to the channel state information report configuration, a priority of sending the measurement result information by the terminal apparatus is lower than a priority of a process of sending measurement result information associated with trigger state information corresponding to the fourth cell and/or a channel state information report configuration corresponding to the fourth cell.

For example, if CC#1 is different from CC#2, a priority of sending measurement result information associated with a trigger state of CC#2 (or a channel state information report configuration of CC#2) triggered by the DCI by using CC#1 is lower than a priority of sending measurement result information associated with a trigger state of CC#1 (or a channel state information report configuration of CC#1) triggered (or activated, or enabled) by the DCI by using CC#1.

It may also be understood that a priority of sending that is of measurement result information associated with a trigger state and/or channel state information of another cell and that is triggered (or activated, or enabled) by the fourth network apparatus by using the fourth cell is lower than a priority of sending of measurement result information associated with a trigger state and/or channel state information of the fourth cell. The "sending that is of measurement result information associated with a trigger state and/or channel state information of another cell and that is triggered (or activated, or enabled) by the fourth network apparatus by using the fourth cell" may also be replaced with "sending that is of measurement result information associated with a trigger state and/or channel state information and that is triggered (or activated, or enabled) by the fourth network apparatus across cells", or may be replaced with "measurement result information reporting that is scheduled by the fourth network apparatus across cells". The "sending that is of measurement result information associated with a trigger state and/or channel state information of the fourth cell and that is triggered (or activated, or enabled) by the fourth network apparatus by using the fourth cell" may also be replaced with "sending that is of measurement result information associated with a trigger state and/or channel state information and that is triggered (or activated, or enabled) by the fourth network apparatus in a same cell", or may be replaced with "measurement result information reporting that is scheduled by the fourth network apparatus in a same cell". In this way, sending of measurement result information associated with inter-cell scheduling does not cause great interference to sending of measurement result information associated with intra-cell scheduling.

For example, when the measurement result information reporting that is scheduled by the fourth network apparatus across cells and the measurement result information reporting that is scheduled by the fourth network apparatus in a same cell overlap on at least one OFDM symbol in time domain of a same subcarrier, a priority of measurement result information reporting that is scheduled across cells is lower than a priority of measurement result information reporting that is scheduled in a same cell. The terminal apparatus may perform multiplexing of reporting according to the priority rule or the terminal apparatus discards the measurement result information scheduled across cells (that is, the terminal apparatus does not report the measurement result information). In a possible implementation, the measurement result information is reported according to the following priority rules: ${Pri}_{iCSI} \left(z, y, k, c, s\right) = 3 ⋅ {N}_{cells} ⋅ {M}_{s} ⋅ z + 2 ⋅ {N}_{cells} ⋅ {M}_{s} ⋅ y + {N}_{cells} ⋅ {M}_{s} ⋅ k + {M}_{s} ⋅ c + s$
z = 0 represents measurement result information reporting that is scheduled by the network apparatus (for example, the fourth network apparatus) across cells; and z = 1 represents measurement result information reporting that is scheduled by the network apparatus (for example, the fourth network apparatus) in a same cell;
*y* = 0 represents an aperiodic CSI report carried on a PUSCH, *y* = 1 represents a semi-persistent CSI report carried on the PUSCH, *y* = 2 represents a semi-persistent CSI report carried on a PUCCH, and *y* = 3 represents a periodic CSI report carried on the PUCCH;
*k* = 0 represents a CSI report that carries L1-RSRP or L1-SINR, and *k* = 1 represents a CSI report that does not carry L1-RSRP or L1-SINR;
c represents an index of a serving cell;
*N_{cells}* represents a maximum quantity of serving cells configured by using a higher layer parameter (the higher layer parameter may be maxNrofServingCells);
s is a report configuration identifier (the report configuration identifier may be denoted as reportConfigID);
*Mₛ* represents a maximum quantity of CSI report configurations configured by using a higher layer parameter (the higher layer parameter may be maxNrofCSI-ReportConfigurations); and
Pri*_{iCSI}* (*z*, *y*, *k*, *c*, *s*) represents a priority, where a smaller Pri*_{iCSI}* (*z*, *y*, *k*, *c*, *s*) value indicates a higher priority.

In embodiments of this application, the fourth network apparatus sends the third information by using the fourth cell, to schedule a trigger state and/or a channel state information report configuration of the fourth cell or a non-fourth cell. Because the third information is sent by the fourth network apparatus based on the first information, this procedure also belongs to a measurement result information reporting procedure triggered by the terminal apparatus. In another possible implementation, the solution provided in this embodiment of this application may also be applied to a measurement result information reporting procedure triggered by the network apparatus. In this solution, the terminal apparatus does not need to first trigger or activate measurement result information reporting, but the network apparatus side first triggers or activates measurement result information reporting. In this solution, a cell used by the network apparatus to send the information for triggering measurement result information reporting may be different from (or may be the same as) a cell associated with the trigger state and/or the channel state information report configuration that is actually activated by the network apparatus by using the information. For example, the network apparatus may trigger, by using DCI sent on CC#1, sending of measurement result information associated with a trigger state of CC#2 (or a channel state information report configuration of CC#2). The DCI is not information sent based on the first information of the terminal apparatus, but is autonomously sent by the network apparatus.

In a possible implementation, when the fourth cell is different from the cell corresponding to the trigger state (or the channel state information report configuration), the information indicating the trigger state (or the channel state information report configuration) may include an identifier of the cell corresponding to the trigger state (or the channel state information report configuration), so that the terminal apparatus determines that the third information is not used to trigger (or activate) the trigger state (or the channel state information report configuration) corresponding to the fourth cell.

In another possible implementation, when the fourth cell is different from the cell corresponding to the trigger state (or the channel state information report configuration), the information indicating the trigger state (or the channel state information report configuration) may not include an identifier of the cell corresponding to the trigger state (or the channel state information report configuration), so that the terminal apparatus may determine that the third information is used to trigger (or activate) the trigger state (or the channel state information report configuration) corresponding to the fourth cell.

Related content of the information C2.1 is similar to related content in the information A2 and the information B1. For details, refer to the foregoing descriptions. Details are not described again.

### Information C2.2: information indicating a cell measured by a terminal apparatus

The information, in the third information, indicating the cell measured by the terminal apparatus may indicate the cell measured by the terminal apparatus. The cell may be understood as a cell that the fourth network apparatus recommends (or indicates, or allows) the terminal apparatus to measure. The cells measured by the terminal apparatus and indicated by the third information and the first information may be the same or different. The terminal apparatus may or may not use the cell measured by the terminal apparatus and indicated by the third information. The cell measured by the terminal apparatus and indicated by the third information may belong to the cell measured by the terminal apparatus and indicated by the configuration information.

For the information C2.2, refer to related descriptions of the information A3 and the information B2. Details are not described again.

### Information C2.3: information indicating a cell in which a terminal apparatus sends measurement result information

The information, in the third information, indicating the cell in which the terminal apparatus sends the measurement result information may indicate the cell in which the terminal apparatus sends the measurement result information. The cell may be understood as a cell in which the fourth network apparatus recommends (or indicates, or allows) the terminal apparatus to send the measurement result information (which may be understood as that the cell is used to transmit signaling including the measurement result information).

For the information C2.3, refer to related descriptions of the information A4 and the information B3. Details are not described again.

### Information C2.4: information indicating a resource for sending measurement result information by a terminal apparatus

The information, in the third information, indicating the resource for sending the measurement result information by the terminal apparatus may indicate the resource for sending the measurement result information by the terminal apparatus. The resource may be understood as a resource in which the fourth network apparatus recommends (or indicates, or allows) the terminal apparatus to send the measurement result information (which may be understood as that the resource is used to transmit signaling including the measurement result information).

For the information C2.4, refer to related descriptions of the information A5 and the information B4. Details are not described again.

### Information C2.5: information indicating a cell to which a reference signal corresponding to measurement result information sent by a terminal apparatus belongs

The information, in the third information, indicating the information indicating the cell to which the reference signal corresponding to the measurement result information sent by the terminal apparatus belongs may indicate the cell to which the reference signal corresponding to the measurement result information sent by the terminal apparatus belongs. The cell may be understood as a cell to which the reference signal corresponding to the measurement result information that the fourth network apparatus recommends (or indicates, or allows) the terminal apparatus to send (the measurement result information is obtained by the terminal apparatus by measuring the reference signal of the cell).

For the information C2.5, refer to related descriptions of the information A6 and the information B5. Details are not described again.

### Information C2.6: information indicating a feature of a reference signal measured by a terminal apparatus

The information, in the third information, indicating the feature of the reference signal measured by the terminal apparatus may indicate the feature of the reference signal measured by the terminal apparatus. The feature may be understood as a feature of the reference signal that the fourth network apparatus recommends (or indicates, or allows) the terminal apparatus to measure.

For the information C2.5, refer to related descriptions of the information A7 and the information B6. Details are not described again.

### Information C2.7: information indicating that a terminal apparatus measures a reference signal

The third information includes the information indicating that the terminal apparatus measures the reference signal, and the terminal apparatus may determine, based on the information, that the third information is at least used to trigger the terminal apparatus to measure the reference signal.

### Information C2.8: information indicating that a terminal apparatus sends measurement result information

The third information includes the information indicating that the terminal apparatus sends the measurement result information, and the terminal apparatus may determine, based on the information, that the third information is at least used to trigger sending of the measurement result information.

The information C2.7 and the information C2.8 may be same information, or may be two pieces of information. If the information C2.7 and the information C2.8 are the same information, when the third information includes the information, it may be determined, based on at least the information, that the third information is used to trigger reference signal measurement and trigger sending of the measurement result information.

In embodiments of this application, the first information is sent by the terminal apparatus, the first information may indicate some information, for example, one or more of the information B1, the information B2, the information B3, the information B4, the information B5, the information B6, the information B7, and the information B8. The fourth network apparatus may agree to a request of the terminal apparatus, for example, agree to the terminal apparatus to use information requested by the terminal apparatus. Alternatively, the fourth network apparatus may not agree to the terminal apparatus to use the information requested by the terminal apparatus.

The fourth network apparatus may further reconfigure some information for the terminal apparatus by using third information. A type of information (which may also be referred to as a parameter item) configured by using the third information may include some or all of types of information (which may also be referred to as parameter items) indicated by the first information. For a same type of information, a specific value of the information (which may be understood as a parameter value) configured by using the third information may be the same as or different from a specific value of the information indicated by the first information. For example, the first information indicates that the terminal apparatus requests to send the measurement result information by using a resource #1. The resource #1 may be understood as a specific value of the information B4 indicated by the first information. The third information may indicate that the terminal apparatus requests to send the measurement result information by using a resource #2. The resource #2 may be understood as a specific value of the information B4 indicated by the third information. The resource #2 may be the same as or different from the resource #1. If the third information is received, the terminal apparatus may send the measurement result information by using (or without using) the resource #2.

In another possible implementation, after receiving the first information, the fourth network apparatus may configure some information for the terminal apparatus by using the third information, where the information may not be indicated by the first information. For example, if the first information does not indicate the indication information of the cell used to send the measurement result information (the information B3), the fourth network apparatus may indicate the information to the terminal apparatus by using the third information.

In embodiments of this application, the information indicated by the third information is information recommended by the fourth network apparatus, and the terminal apparatus may use or may not use the information indicated by the third information. The information indicated by the third information may belong to the information indicated by the configuration information, or may not belong to the information indicated by the configuration information.

In a possible implementation, after receiving the third information for a period of time (for example, a period of time specified in a protocol, where the period of time may be a specified quantity of slots, a specified quantity of symbols, or the like), the terminal apparatus may start to measure the reference signal and/or send the measurement result information. The third information may indicate that the first information is successfully received, or indicate that content indicated by the first information is accepted, or indicate one or more of the information C2.1, the information C2.2, the information C2.3, the information C2.4, the information C2.5, and the information C2.6.

Step 304: The second network apparatus sends at least one reference signal by using the second cell.

Correspondingly, the terminal apparatus receives the at least one reference signal by using the second cell.

In a possible implementation, the second network apparatus frequently sends reference signals, for example, periodically sends reference signals. The terminal apparatus may measure these reference signals.

In another possible implementation, the second network apparatus sends a reference signal after the first network apparatus receives the first information. The reference signal may better match a reference signal that the terminal apparatus actually needs to measure. For example, the reference signal may have a feature of the reference signal that the terminal apparatus requests to measure. In embodiments of this application, the second network apparatus and the first network apparatus may be a same network apparatus, or may be two apparatuses of a same physical device. The second network apparatus may obtain the first information. For example, the second network apparatus may obtain the first information by performing signaling interaction with the first network apparatus, or the second network apparatus may obtain the first information without performing signaling interaction with the first network apparatus.

For content of step 304, refer to content of step 202. Details are not described again.

Step 305: The terminal apparatus measures the at least one reference signal to obtain at least one piece of measurement result information.

For content of step 305, refer to content of step 203. Details are not described again.

Step 306: The terminal apparatus sends second information by using a third cell.

Correspondingly, the third network apparatus receives the second information by using the third cell.

The second information includes the at least one piece of measurement result information.

For content of step 306, refer to content of step 212. Details are not described again.

Some steps in the solution provided in FIG. 3 may not be performed. For example, step 301 may not be performed, or step 303 may not be performed. For another example, step 306 may not be performed. In this case, it may be understood that the first information is used to trigger reference signal measurement. For another example, step 304 and step 305 are not performed. In this case, the measurement result information included in the second information in step 306 may be measurement result information previously measured by the terminal apparatus, for example, measurement result information obtained by the terminal apparatus by periodically measuring the reference signal.

In embodiments of this application, information (for example, the first information and/or the second information) sent by the terminal apparatus may be sent by using uplink control information (uplink control information, UCI) and/or a MAC CE. The information may be carried on a physical uplink control channel (physical uplink control channel, PUCCH) and/or a physical uplink shared channel (physical uplink shared channel, PUSCH). Information (for example, the configuration information and/or the third information) received by the terminal apparatus may be sent by using DCI and/or a MAC CE. The information may be carried on a physical downlink control channel (physical downlink control channel, PUCCH) and/or a physical downlink shared channel (physical downlink shared channel, PUSCH).

It may be understood that, to implement functions in the foregoing embodiments, the first apparatus, the second apparatus, and a positioning management apparatus may include corresponding hardware structures and/or software modules for performing the functions. A person skilled in the art should easily be aware that, in combination with the units and method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

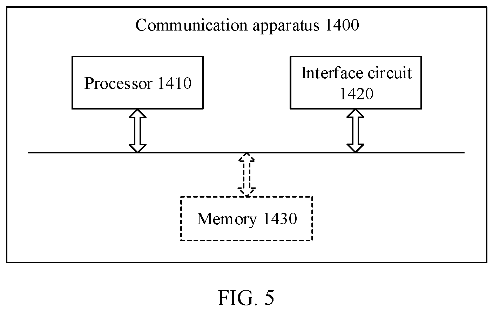

FIG. 4 and FIG. 5 are diagrams of structures of possible communication apparatuses according to embodiments of this application. The communication apparatuses may be configured to implement the functions of the terminal or the base station in the foregoing method embodiments, and therefore can also achieve beneficial effect of the foregoing method embodiments. In embodiments of this application, the communication apparatus may be the terminal device shown in FIG. 1, or may be the network device (for example, the RAN node) shown in FIG. 1, or may be a chip system used in the terminal device or the network device shown in FIG. 1.

As shown in FIG. 4, a communication apparatus 1300 includes a processing unit 1310 and a transceiver unit 1320. The communication apparatus 1300 is configured to implement functions of the terminal apparatus or the network apparatus (for example, the first network apparatus, the second network apparatus, the third network apparatus, the fourth network apparatus, or the fifth network apparatus) in the method embodiment shown in FIG. 2A, FIG. 2B, or FIG. 2C. The transceiver unit 1320 may also be referred to as a communication unit. The transceiver unit 1320 may include a sending unit and a receiving unit.

When the communication apparatus 1300 is configured to implement the functions of the terminal apparatus in the method embodiment shown in FIG. 2A, the processing unit 1310 may perform step 203, and the transceiver unit 1320 may perform step 201 and step 202. In a possible implementation, the sending unit may be configured to send the first information by using the first cell, the receiving unit may be further configured to receive the at least one reference signal by using the second cell, and the processing unit may be configured to measure the at least one reference signal to obtain the at least one piece of measurement result information.

When the communication apparatus 1300 is configured to implement the functions of the terminal apparatus in the method embodiment shown in FIG. 2B, the transceiver unit 1320 may perform step 211 and step 212. In a possible implementation, the sending unit may be configured to: send the first information by using the first cell, and send the second information by using the third cell.

When the communication apparatus 1300 is configured to implement the functions of the terminal apparatus in the method embodiment shown in FIG. 2C, the processing unit 1310 may perform step 224, and the transceiver unit 1320 may perform step 221, step 222, step 223, and step 225. In a possible implementation, the sending unit may be configured to: send, by using the first cell, the information indicating that the terminal apparatus requests to measure the reference signal, and send, by using the first cell, the information indicating that the terminal apparatus requests to send the measurement result information. The receiving unit may be configured to receive the at least one reference signal by using the second cell. The processing unit may be configured to measure the at least one reference signal to obtain the at least one piece of measurement result information. The sending unit may be configured to send the second information by using the third cell.

When the communication apparatus 1300 is configured to implement the functions of the terminal apparatus in the method embodiment shown in FIG. 3, the processing unit 1310 may perform step 305, and the transceiver unit 1320 may perform step 301, step 302, step 303, step 304, and step 306. In a possible implementation, the receiving unit may be configured to receive the configuration information. The sending unit is configured to send the first information by using the first cell. The receiving unit is configured to receive the third information by using the fourth cell. The receiving unit is configured to receive the at least one reference signal by using the second cell. The processing unit is configured to measure the at least one reference signal to obtain the at least one piece of measurement result information. The sending unit is configured to send the second information by using the third cell.

When the communication apparatus 1300 is configured to implement the functions of the first network apparatus in the method embodiment shown in FIG. 2A, FIG. 2B, FIG. 2C, or FIG. 3, the transceiver unit 1320 may perform step 201, step 211, step 221, step 222, or step 302. In a possible implementation, the receiving unit may be configured to receive the first information by using the first cell.

When the communication apparatus 1300 is configured to implement the functions of the second network apparatus in the method embodiment shown in FIG. 2A, FIG. 2C, or FIG. 3, the transceiver unit 1320 may perform step 202, step 223, or step 304. In a possible implementation, the sending unit may be configured to send the at least one reference signal by using the second cell.

When the communication apparatus 1300 is configured to implement the functions of the third network apparatus in the method embodiment shown in FIG. 2B, FIG. 2C, or FIG. 3, the transceiver unit 1320 may perform step 212 or step 306. In a possible implementation, the receiving unit may be configured to receive the second information by using the third cell.

When the communication apparatus 1300 is configured to implement the functions of the fourth network apparatus in the method embodiment shown in FIG. 3, the transceiver unit 1320 may perform step 303. In a possible implementation, the sending unit may be configured to send the third information by using the fourth cell.

When the communication apparatus 1300 is configured to implement the functions of the fifth network apparatus in the method embodiment shown in FIG. 3, the transceiver unit 1320 may perform step 301. In a possible implementation, the sending unit may be configured to send the configuration information.

For more detailed descriptions of the processing unit 1310 and the transceiver unit 1320, refer to related descriptions in the method embodiments shown in FIG. 2A, FIG. 2B, FIG. 2C, and FIG. 3.

As shown in FIG. 5, a communication apparatus 1400 includes a processor 1410 and an interface circuit 1420. The processor 1410 and the interface circuit 1420 are coupled to each other. It can be understood that the interface circuit 1420 may be a transceiver or an input/output interface. The input/output interface is configured to: input and/or output information. Outputting may be understood as sending, and inputting may be understood as receiving. Optionally, the communication apparatus 1400 may further include a memory 1430, configured to: store instructions to be executed by the processor 1410, store input data required for running instructions by the processor 1410, or store data generated after the processor 1410 runs instructions.

When the communication apparatus 1400 is configured to implement the method shown in FIG. 2B, FIG. 2C, or FIG. 3, the processor 1410 is configured to implement the functions of the processing unit 1310, and the interface circuit 1420 is configured to implement the functions of the transceiver unit 1320.

When the communication apparatus is a chip used in a terminal, the chip in the terminal implements the functions of the terminal apparatus in the foregoing method embodiments. That the chip in the terminal receives information from a base station may be understood as that the information is first received by another module (for example, a radio frequency module or an antenna) in the terminal, and then sent by the module to the chip in the terminal. That the chip in the terminal sends information to a base station may be understood as that the information is first sent to another module (for example, a radio frequency module or an antenna) in the terminal, and then sent to the base station by the module.

When the communication apparatus is a chip used in a base station, the chip in the base station implements the functions of the network apparatus in the foregoing method embodiments. That the chip in the base station receives information from a terminal may be understood as that the information is first received by another module (for example, a radio frequency module or an antenna) in the base station, and then sent by the module to the chip in the base station. That the chip in the base station sends information to a terminal may be understood as that the information is first sent to another module (for example, a radio frequency module or an antenna) in the base station, and then sent to the terminal by the module.

In this application, that an entity A sends information to an entity B may be that A directly sends the information to B, or may be that A indirectly sends the information to B via another entity. Similarly, that the entity B receives the information from the entity A may be that the entity B directly receives the information sent by the entity A, or may be that the entity B indirectly receives the information sent by the entity A via another entity. The entities A and B herein each may be a RAN node or a terminal, or may be a module inside a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules inside an apparatus, for example, information exchange between a chip in a terminal and another module in the terminal, or information exchange between a chip in a base station and another module in the base station.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or a part of the foregoing embodiments may be implemented by using software, hardware, firmware, or any combination thereof. When the software is used to implement the foregoing embodiments, all or a part of the foregoing embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by a computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers (for example, numeral numbers "first" and "second" and letter numbers"A1", "B1", and "C1") in embodiments of this application are merely used for differentiation for ease of description, and are not intended to limit the scope of embodiments of this application. Sequence numbers of the foregoing processes do not mean an execution sequence, and the execution sequence of the processes should be determined based on functions and internal logic of the processes.

## Claims

1. A communication method, wherein the method is applicable to a terminal apparatus, and the method comprises:
sending first information by using a first cell, wherein the first information indicates that the terminal apparatus requests to measure a reference signal of a second cell, and/or the terminal apparatus requests to send a measurement result of the reference signal of the second cell;
receiving at least one reference signal by using the second cell; and
measuring the at least one reference signal to obtain at least one measurement result.

2. The method according to claim 1, wherein the method further comprises:
determining a cell used to send a measurement result, wherein the cell used to send the measurement result comprises a third cell; and
sending second information by using the third cell, wherein the second information comprises a part or all of the at least one measurement result.

3. The method according to claim 1 or 2, wherein the first information comprises at least one of the following:
information indicating a reference signal resource;
information indicating the second cell;
indication information of a cell used to send measurement result information;
indication information of a resource used to send measurement result information; and
information indicating a cell to which a reference signal corresponding to measurement result information that the terminal apparatus requests to send belongs.

4. The method according to claim 3, wherein the first information further comprises information indicating at least one of the following:
a plurality of reference signals that the terminal apparatus requests to measure are sent by using a same downlink spatial domain filter;
a plurality of reference signals that the terminal apparatus requests to measure are capable of being simultaneously received by the terminal apparatus;
a spatial domain filter corresponding to a plurality of reference signals that the terminal apparatus requests to measure is capable of being applied by the terminal apparatus to simultaneous sending; and
a resource of a reference signal that the terminal apparatus requests to measure belongs to a reference signal resource associated with N transmission reception points, wherein N is a positive integer.

5. The method according to any one of claims 1 to 4, wherein the method further comprises:
determining a first resource, wherein the first resource is used to send information for requesting to measure a reference signal, and/or the first resource is used to send information for requesting to send the measurement result information; and
sending the first information by using the first cell comprises:
sending the first information on the first resource by using the first cell.

6. The method according to claim 5, wherein the method further comprises:
receiving configuration information; and
determining the first resource based on the configuration information, wherein
the configuration information comprises at least one of the following, and/or information indicating an association relationship between at least two of the following:
information indicating the first resource;
the information indicating the reference signal resource;
the information indicating the second cell;
the indication information of the cell used to send the measurement result information;
the indication information of the resource used to send the measurement result information; and
the information indicating the cell to which the reference signal corresponding to the measurement result information that the terminal apparatus requests to send belongs.

7. The method according to claim 3, 4, or 6, wherein the information indicating the reference signal resource comprises at least one of the following:
information indicating a trigger state, wherein the reference signal resource belongs to a resource associated with the trigger state, a cell corresponding to the reference signal resource associated with the trigger state comprises the second cell, and a cell corresponding to the trigger state is different from or the same as the second cell;
information indicating a channel state information report configuration, wherein the reference signal resource belongs to a resource associated with the channel state information report configuration, a cell corresponding to the reference signal resource associated with the channel state information report configuration comprises the second cell, and a cell corresponding to the channel state information report configuration is different from or the same as the second cell;
synchronization signal block index information, wherein the reference signal resource belongs to a resource associated with the synchronization signal block index information;
an identifier of the reference signal resource;
an identifier of a resource set corresponding to the reference signal resource; and
an identifier of a resource configuration corresponding to the reference signal resource.

8. The method according to any one of claims 1 to 7, wherein after sending the first information by using the first cell, the method further comprises:
receiving third information by using a fourth cell, wherein the fourth cell is the same as or different from the first cell, and the fourth cell is the same as or different from the second cell; and
the third information indicates that the first information is successfully received or unsuccessfully received;
or
the third information is used to: trigger the terminal apparatus to measure the reference signal of the second cell, and/or trigger the terminal apparatus to send the measurement result information.

9. The method according to claim 8, wherein the third information comprises at least one of the following:
the information indicating the second cell;
the information indicating the trigger state, wherein the cell corresponding to the reference signal resource associated with the trigger state comprises the second cell, the cell corresponding to the trigger state is different from or the same as the second cell, and the cell corresponding to the trigger state is different from or the same as the fourth cell;
the information indicating the channel state information report configuration, wherein the cell corresponding to the reference signal resource associated with the channel state information report configuration comprises the second cell, the cell corresponding to the channel state information report configuration is different from or the same as the second cell, and the cell corresponding to the channel state information report configuration is different from or the same as the fourth cell;
the indication information of the cell used to send the measurement result information;
the indication information of the resource used to send the measurement result information; and
information indicating a cell to which a reference signal corresponding to a measurement result sent by the terminal apparatus belongs.

10. The method according to claim 9, wherein at least one of the following is met:
when the fourth cell is different from the cell corresponding to the trigger state and/or the cell corresponding to the channel state information report configuration, a priority of sending the measurement result information by the terminal apparatus is lower than a priority of sending measurement result information associated with trigger state information corresponding to the fourth cell and/or a channel state information report configuration corresponding to the fourth cell;
a priority of sending the measurement result information by the terminal apparatus is lower than a priority of aperiodic or semi-persistent measurement result information sending triggered by a network apparatus; and
a priority of sending the measurement result information by the terminal apparatus is lower than a priority of periodic measurement result information sending.

11. A communication method, wherein the method is applied to a first network apparatus, and the method comprises:
receiving first information by using a first cell, wherein the first information indicates that the terminal apparatus requests to measure a reference signal of a second cell, and/or the terminal apparatus requests to send a measurement result of the reference signal of the second cell; and
determining, based on the first information, that the terminal apparatus requests to measure the reference signal of the second cell.

12. The method according to claim 11, wherein the first information comprises at least one of the following:
information indicating a reference signal resource;
information indicating the second cell;
indication information of a cell used to send measurement result information;
indication information of a resource used to send measurement result information; and
information indicating a cell to which a reference signal corresponding to measurement result information that the terminal apparatus requests to send belongs.

13. The method according to claim 12, wherein the information indicating the reference signal resource comprises at least one of the following:
information indicating a trigger state, wherein the reference signal resource belongs to a resource associated with the trigger state, a cell corresponding to the reference signal resource associated with the trigger state comprises the second cell, and a cell corresponding to the trigger state is different from or the same as the second cell;
information indicating a channel state information report configuration, wherein the reference signal resource belongs to a resource associated with the channel state information report configuration, a cell corresponding to the reference signal resource associated with the channel state information report configuration comprises the second cell, and a cell corresponding to the channel state information report configuration is different from or the same as the second cell;
synchronization signal block index information, wherein the reference signal resource belongs to a resource associated with the synchronization signal block index information;
an identifier of the reference signal resource;
an identifier of a resource set corresponding to the reference signal resource; and
an identifier of a resource configuration corresponding to the reference signal resource.

14. The method according to any one of claims 11 to 13, wherein the first information further comprises information indicating at least one of the following:
a plurality of reference signals that the terminal apparatus requests to measure are sent by using a same downlink spatial domain filter;
a plurality of reference signals that the terminal apparatus requests to measure are capable of being simultaneously received by the terminal apparatus;
a spatial domain filter corresponding to a plurality of reference signals that the terminal apparatus requests to measure is capable of being applied by the terminal apparatus to simultaneous sending; and
a resource of a reference signal that the terminal apparatus requests to measure belongs to a reference signal resource associated with N transmission reception points, wherein N is a positive integer.

15. The method according to any one of claims 11 to 14, wherein receiving the first information by using the first cell comprises:
receiving the first information on the first resource by using the first cell, wherein the first resource is used to send information for requesting to measure a reference signal, and/or the first resource is used to send information for requesting to send the measurement result information.

16. The method according to any one of claims 11 to 15, wherein after receiving the first information by using the first cell, the method further comprises:
receiving third information by using a fourth cell, wherein the fourth cell is the same as or different from the first cell, and the fourth cell is the same as or different from the second cell; and
the third information indicates that the first information is successfully received or unsuccessfully received;
or
the third information is used to: trigger the terminal apparatus to measure the reference signal of the second cell, and/or trigger the terminal apparatus to send the measurement result information.

17. The method according to claim 16, wherein the third information comprises at least one of the following:
the information indicating the second cell;
the information indicating the trigger state, wherein the cell corresponding to the reference signal resource associated with the trigger state comprises the second cell, the cell corresponding to the trigger state is different from or the same as the second cell, and the cell corresponding to the trigger state is different from or the same as the fourth cell;
the information indicating the channel state information report configuration, wherein the cell corresponding to the reference signal resource associated with the channel state information report configuration comprises the second cell, the cell corresponding to the channel state information report configuration is different from or the same as the second cell, and the cell corresponding to the channel state information report configuration is different from or the same as the fourth cell;
the indication information of the cell used to send the measurement result information;
the indication information of the resource used to send the measurement result information; and
information indicating a cell to which a reference signal corresponding to a measurement result sent by the terminal apparatus belongs.

18. A communication apparatus, comprising a module configured to perform the method according to any one of claims 1 to 17.

19. A communication apparatus, comprising a processor, wherein the processor implements the method according to any one of claims 1 to 17 by using a logic circuit or by executing a computer program or instructions.

20. A computer-readable storage medium, wherein the storage medium stores a computer program or instructions, and when the computer program or the instructions are executed by a communication apparatus, the method according to any one of claims 1 to 17 is implemented.
